(19) Europäisches Patentamt
European Patent Office
Office européen des brevets

(11) **EP 1 959 668 A2**

(12) **EUROPEAN PATENT APPLICATION**

(43) Date of publication:
**20.08.2008 Bulletin 2008/34**

(51) Int Cl.:
*H04N 1/32* (2006.01)

(21) Application number: **08250566.0**

(22) Date of filing: **19.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.02.2007 JP 2007038369**
**05.12.2007 JP 2007315245**

(71) Applicant: **Seiko Epson Corporation**
**Shinjuku-ku**
**Tokyo 163-0811 (JP)**

(72) Inventors:
• **Kasai, Tsuneo**
  **Suwa-shi, Nagano-ken 392-8502 (JP)**
• **Kuwata, Naoki**
  **Suwa-shi, Nagano-ken 392-8502 (JP)**
• **Kasahara, Hirokazu**
  **Suwa-shi, Nagano-ken 392-8502 (JP)**

(74) Representative: **Cloughley, Peter Andrew et al**
**Miller Sturt Kenyon**
**9 John Street**
**London WC1N 2ES (GB)**

(54) **Information processing method, information processing apparatus, and program**

(57) An information processing method of the present invention includes acquiring scene information of image data from supplemental data appended to the image data, identifying a scene of an image represented by the image data based on the image data, and storing the identified scene in the supplemental data when there is a mismatch between a scene indicated by the scene information and the identified scene.

| TAG NAME |
|:---:|
| TITLE |
| MAKE |
| MODEL |
| RESOLUTION IN X DIRECTION |
| RESOLUTION IN Y DIRECTION |
| ⋮ |
| COPYRIGHT INFORMATION |
| ExifIFDPointer |

**FIG. 4A**

EP 1 959 668 A2

**(Cont. next page)**

| TAG NAME |
| --- |
| EXPOSURE TIME |
| LENS F NUMBER |
| EXPOSURE CONTROL MODE |
| ISO SENSITIVITY |
| Exif VERSION |

⋮

| LIGHT SOURCE |
| --- |
| FLASH |
| LENS FOCAL LENGTH |
| MakerNote |

⋮

| 35 mm EQUIVALENT LENS FOCAL LENGTH |
| --- |
| SCENE CAPTURE TYPE |

⋮

FIG. 4B

## Description

CROSS-REFERENCE TO RELATED APPLICATIONS

The present application claims priority upon Japanese Patent Application No. 2007-038369 filed on February 19, 2007 and Japanese Patent Application No. 2007-315245 filed on December 5, 2007, which are herein incorporated by reference.

BACKGROUND

Technical Field

The present invention relates to information processing methods, information processing apparatuses, and programs.

Related Art

Some digital still cameras have mode setting dials for setting the shooting mode. When the user sets a shooting mode using the dial, the digital still camera determines shooting conditions (such as exposure time) according to the shooting mode and takes a picture. When the picture is taken, the digital still camera generates an image file. This image file contains image data about an image photographed and supplemental data about, for example, the shooting conditions when photographing the image, which is appended to the image data.

On the other hand, subjecting the image data to image processing according to the supplemental data has also been practiced. For example, when a printer performs printing based on the image file, the image data is corrected according to the shooting conditions indicated by the supplemental data and printing is performed in accordance with the corrected image data. JP-A-2001-238177 describes an example of a background art.

There are instances where the user forgets to set the shooting mode and thus a picture is taken while a shooting mode unsuitable for the shooting conditions remains set. For example, a daytime scene may be photographed with the night scene mode being set. This results in a situation in which data indicating the night scene mode is stored in the supplemental data although the image data in the image file is an image of the daytime scene. In such a situation, when the image data is corrected in accordance with the night scene mode indicated by the supplemental data, the image data may not be appropriately corrected. Such a problem is caused not only by improper dial setting but also by a mismatch between the contents of the image data and the contents of the supplemental data.

SUMMARY

The present invention has been devised in light of these circumstances and it is an advantage thereof to eliminate problems caused by a mismatch between the contents of the image data and the contents of the supplemental data.

In order to achieve the above-described advantage, a primary aspect of the invention is directed to an information processing method including acquiring scene information of image data from supplemental data appended to the image data; identifying a scene of an image represented by the image data based on the image data; and storing the identified scene in the supplemental data when there is a mismatch between a scene indicated by the scene information and the scene identified by identifying the scene of the image.

Other features of the invention will become clear through the explanation in the present specification and the description of the accompanying drawings.

BRIEF DESCRIPTION OF THE DRAWINGS

For a more complete understanding of the present invention and the advantages thereof, reference is now made to the following description taken in conjunction with the accompanying drawings wherein:

Fig. 1 is an explanatory diagram of an image processing system;
Fig. 2 is an explanatory diagram of a configuration of a printer;
Fig. 3 is an explanatory diagram of a structure of an image file;
Fig. 4A is an explanatory diagram of tags used in IFD0; Fig. 4B is an explanatory diagram of tags used in Exif SubIFD;
Fig. 5 is a correspondence table that shows the correspondence between the settings of a mode setting dial and data;
Fig. 6 is an explanatory diagram of an automatic correction function of the printer;
Fig. 7 is an explanatory diagram of the relationship between scenes of images and correction details;
Fig. 8 is a flow diagram of scene identification processing by a scene identification section;
Fig. 9 is an explanatory diagram of functions of the scene identification section;
Fig. 10 is a flow diagram of overall identification processing;
Fig. 11 is an explanatory diagram of an identification target table;
Fig. 12 is an explanatory diagram of a positive threshold in the overall identification processing;
Fig. 13 is an explanatory diagram of Recall and Precision;
Fig. 14 is an explanatory diagram of a first negative threshold;
Fig. 15 is an explanatory diagram of a second negative threshold;
Fig. 16A is an explanatory diagram of thresholds in a landscape identifying section; Fig. 16B is an explanatory diagram of an outline of processing with the landscape identifying section;

Fig. 17 is a flow diagram of partial identification processing;

Fig. 18 is an explanatory diagram of the order in which partial images are selected by an evening partial identifying section;

Fig. 19 shows graphs of Recall and Precision when an evening scene image is identified using only the top-ten partial images;

Fig. 20A is an explanatory diagram of discrimination using a linear support vector machine; Fig. 20B is an explanatory diagram of discrimination using a kernel function;

Fig. 21 is a flow diagram of integrative identification processing;

Fig. 22 is a flow diagram of scene information correction processing of an embodiment; and

Fig. 23 is an explanatory diagram of a configuration of an APP1 segment when an identification result is added to supplemental data.

DESCRIPTION OF EXEMPLARY EMBODIMENTS

At least the following matters will be made clear by the explanation in the present specification and the description of the accompanying drawings.

An information processing method including acquiring scene information of image data from supplemental data appended to the image data; identifying a scene of an image represented by the image data based on the image data; and storing the identified scene in the supplemental data when there is a mismatch between a scene indicated by the scene information and the scene identified by identifying the scene of the image will be made clear.

According to this information processing method, problems caused by a mismatch between the contents of the image data and the contents of the supplemental data can be eliminated.

Moreover, it is preferable that storing the identified scene in the supplemental data includes rewriting the scene indicated by the scene information to the identified scene. With this configuration, problems caused by a mismatch between the contents of the image data and the contents of the supplemental data can be eliminated

Moreover, it is preferable that storing the identified scene in the supplemental data includes storing the identified scene in the supplemental data while leaving the scene information unchanged. With this configuration, the necessity to erase the original data can be avoided.

Moreover, it is preferable that storing the identified scene in the supplemental data includes storing, in conjunction with the identified scene, an evaluation result according to an accuracy rate of an identification result in the supplemental data. With this configuration, the image file has data that can reduce the influence of misidentification.

Moreover, it is preferable that identifying a scene of an image represented by the image data includes characteristic amount acquisition of acquiring a characteristic amount indicating a characteristic of the image, and scene identification of identifying the scene of the image based on the characteristic amount. With this configuration, the precision of identification is improved.

Moreover, it is preferable that the characteristic amount acquisition includes acquiring an overall characteristic amount indicating a characteristic of the image in its entirety, and acquiring a partial characteristic amount indicating a characteristic of a partial image contained in the image, and the scene identification includes an overall identification of identifying the scene of the image based on the overall characteristic amount and a partial identification of identifying the scene of the image based on the partial characteristic amount, and when the scene of the image represented by the image data cannot be identified in the overall identification, the partial identification is performed, and when the scene of the image can be identified in the overall identification, the partial identification is not performed. With this configuration, the processing speed is increased.

Moreover, it is preferable that the overall identification includes calculating an evaluation value according to a probability that the image is a specific scene based on the overall characteristic amount and identifying the image as the specific scene when the evaluation value is larger than a first threshold, and the partial identification includes identifying the image as the specific scene based on the partial characteristic amount, and when the evaluation value in the overall identification is smaller than a second threshold, the partial identification is not performed. With this configuration, the processing speed is increased.

Moreover, it is preferable that the scene identification includes a first scene identification of identifying the image as a first scene based on the characteristic amount and a second scene identification of identifying the image as a second scene that is different from the first scene based on the characteristic amount, and the first scene identification includes calculating an evaluation value according to a probability that the image is the first scene based on the characteristic amount and identifying the image as the first scene when the evaluation value is larger than a first threshold, and in the scene identification, when the evaluation value in the first identification is larger than a third threshold, the second scene identification is not performed. With this configuration, the processing speed is increased.

Furthermore, an information processing apparatus includes: a scene information acquisition section that acquires scene information indicating a scene of image data from supplemental data appended to the image data; a scene identifying section that identifies a scene of an image represented by the image data based on the image data; and a supplemental data storing section that stores an identified scene in the supplemental data when there is a mismatch between a scene indicated by the scene information and the scene identified by the scene identifying section will be made clear.

Furthermore, a program that makes an information processing apparatus acquire scene information indicating a scene of image data from supplemental data appended to the image data; identify a scene of an image represented by the image data based on the image data; and store the identified scene in the supplemental data when there is a mismatch between the scene indicated by the scene information and the scene identified by identifying the scene of the image will also be made clear.

Overall Configuration

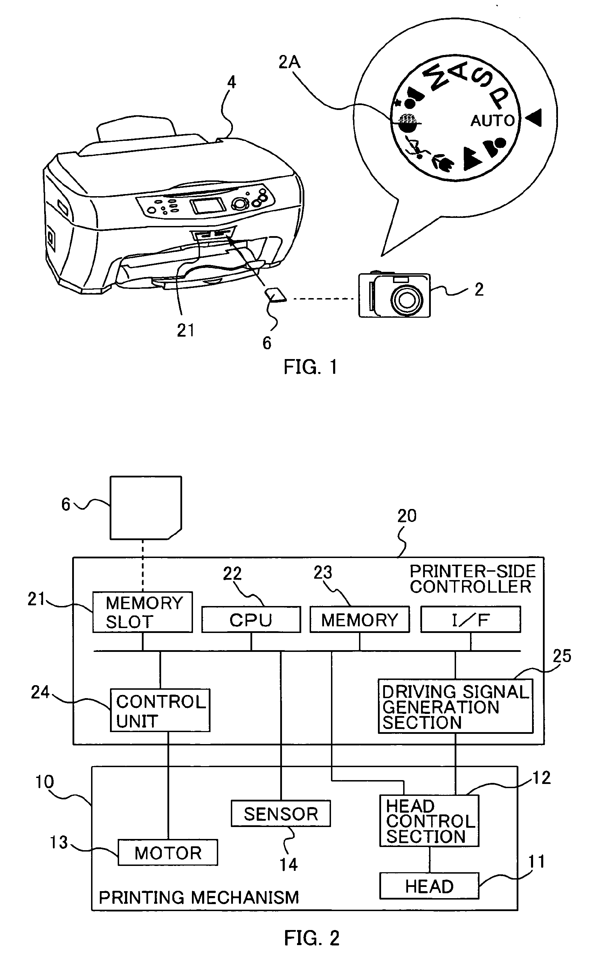

Fig. 1 is an explanatory diagram of an image processing system. This image processing system includes a digital still camera 2 and a printer 4.

The digital still camera 2 is a camera that captures a digital image by forming an image of a subject onto a digital device (such as a CCD). The digital still camera 2 is provided with a mode setting dial 2A. The user can set a shooting mode according to the shooting conditions using the dial 2A. For example, when the "night scene" mode is set with the dial 2A, the digital still camera 2 makes the shutter speed long or increases the ISO sensitivity to take a picture with shooting conditions suitable for photographing a night scene.

The digital still camera 2 saves an image file, which has been generated by taking a picture, on a memory card 6 in conformity with the file format standard. The image file contains not only digital data (image data) about an image photographed but also supplemental data about, for example, the shooting conditions (shooting data) at the time when the image was photographed.

The printer 4 is a printing apparatus for printing the image represented by the image data on paper. The printer 4 is provided with a slot 21 into which the memory card 6 is inserted. After taking a picture with the digital still camera 2, the user can remove the memory card 6 from the digital still camera 2 and insert the memory card 6 into the slot 21.

Fig. 2 is an explanatory diagram of a configuration of the printer 4. The printer 4 includes a printing mechanism 10 and a printer-side controller 20 for controlling the printing mechanism 10. The printing mechanism 10 has a head 11 for ejecting ink, a head control section 12 for controlling the head 11, a motor 13 for, for example, transporting paper, and a sensor 14. The printer-side controller 20 has the memory slot 21 for sending/receiving data to/from the memory card 6, a CPU 22, a memory 23, a control unit 24 for controlling the motor 13, and a driving signal generation section 25 for generating driving signals (driving waveforms).

When the memory card 6 is inserted into the slot 21, the printer-side controller 20 reads out the image file saved on the memory card 6 and stores the image file in the memory 23. Then, the printer-side controller 20 converts image data in the image file into print data to be printed by the printing mechanism 10 and controls the printing mechanism 10 based on the print data to print the image on paper. A sequence of these operations is called "direct printing."

It should be noted that "direct printing" not only is performed by inserting the memory card 6 into the slot 21, but also can be performed by connecting the digital still camera 2 to the printer 4 via a cable (not shown).

Structure of Image File

An image file is constituted by image data and supplemental data. The image data is constituted by a plurality of units of pixel data. The pixel data is data indicating color information (tone value) of each pixel. An image is made up of pixels arranged in a matrix form. Accordingly, the image data is data representing an image. The supplemental data includes data indicating the properties of the image data, shooting data, thumbnail image data, and the like.

Hereinafter, a specific structure of an image file is described.

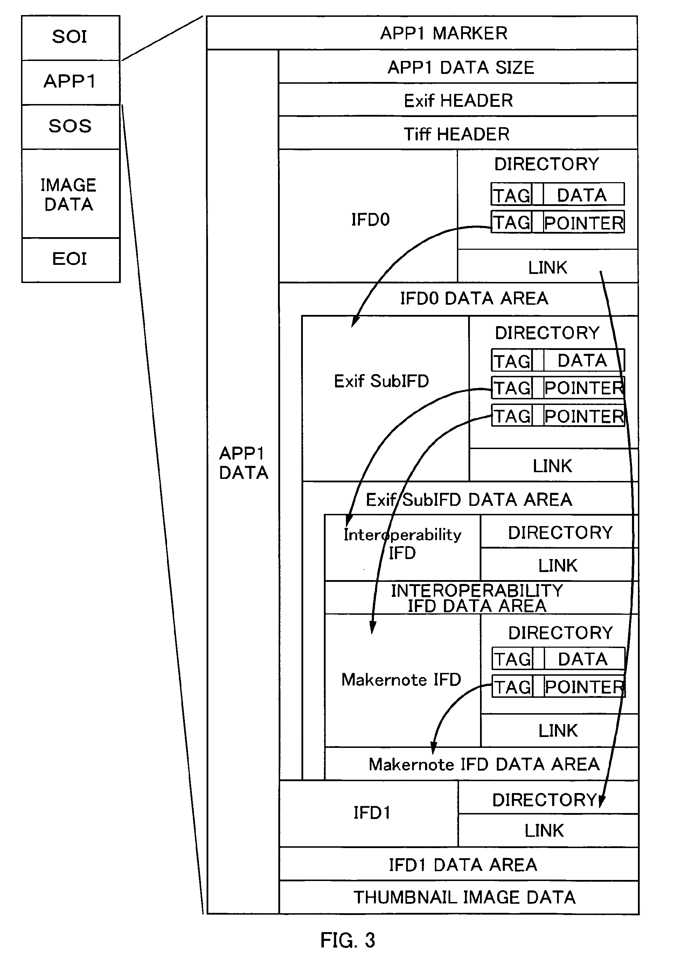

Fig. 3 is an explanatory diagram of the structure of the image file. An overall configuration of the image file is shown in the left side of the diagram, and a configuration of an APP1 segment is shown in the right side of the diagram.

The image file begins with a marker indicating SOI (Start of image) and ends with a marker indicating EOI (End of image). The marker indicating SOI is followed by an APP1 marker indicating the start of a data area of APP1. The data area of APP1 after the APP1 marker contains supplemental data, such as shooting data and a thumbnail image. Moreover, image data is included after a marker indicating SOS (Start of Stream).

After the APP1 marker, information indicating the size of the data area of APP1 is placed, which is followed by an EXIF header, a TIFF header, and then IFD areas.

Every IFD area has a plurality of directory entries, a link indicating the location of the next IFD area, and a data area. For example, the first IFD, IFD0 (IFD of main image), links to the location of the next IFD, IFD1 (IFD of thumbnail image). However, there is no IFD next to the IFD1 here, so that the IFD1 does not link to any other IFDs. Every directory entry contains a tag and a data section. When a small amount of data is to be stored, the data section stores actual data as it is, whereas when a large amount of data is to be stored, actual data is stored in an IFD0 data area and the data section stores a pointer indicating the storage location of the data. It should be noted that the IFD0 contains a directory entry in which a tag (Exif IFD Pointer), meaning the storage location of an Exif SubIFD, and a pointer (offset value), indicating the storage location of the Exif SubIFD, are stored.

The Exif SubIFD area has a plurality of directory entries. These directory entries also contain a tag and a data section. When a small amount of data is to be stored, the data section stores actual data as it is, whereas when a large amount of data is to be stored, actual data is stored in an Exif SubIFD data area and the data section stores a pointer indicating the storage location of the data. It should be noted that the Exif SubIFD stores a tag meaning the storage location of a Makernote IFD and a pointer indicating the storage location of the Makernote IFD.

The Makernote IFD area has a plurality of directory entries. These directory entries also contain a tag and a data section. When a small amount of data is to be stored, the data section stores actual data as it is, whereas when a large amount of data is to be stored, actual data is stored in a Makernote IFD data area and the data section stores a pointer indicating the storage location of the data. However, regarding the Makernote IFD area, the data storage format can be defined freely, so that data is not necessarily stored in this format. In the following description, data stored in the Makernote IFD area is referred to as "MakerNote data."

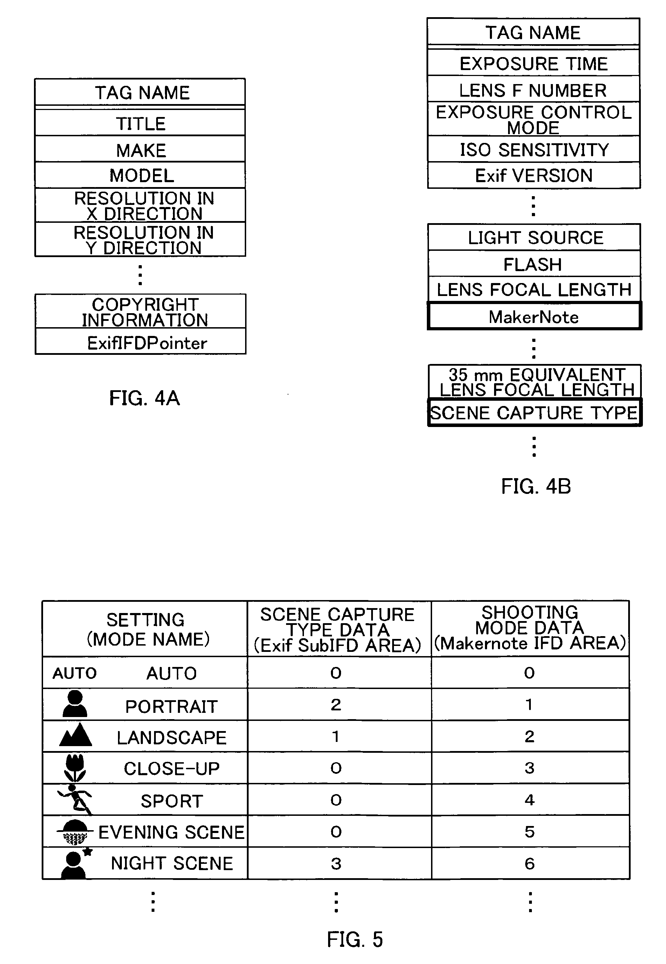

Fig. 4A is an explanatory diagram of tags used in the IFD0. As shown in the diagram, the IFD0 stores general data (data indicating the properties of the image data) and no detailed shooting data.

Fig. 4B is an explanatory diagram of tags used in the Exif SubIFD. As shown in the diagram, the Exif SubIFD stores detailed shooting data. It should be noted that most of shooting data that is extracted during scene identification processing is the shooting data stored in the Exif SubIFD. The scene capture type tag (Scene Capture Type) is a tag indicating the type of a scene photographed. Moreover, the Makernote tag is a tag indicating the storage location of the Makernote IFD.

When a data section (scene capture type data) corresponding to the scene capture type tag in the Exif SubIFD is "zero," it means "Normal," "1" means "landscape, " "2" means "portrait," and "3" means "night scene." It should be noted that since data stored in the Exif SubIFD is standardized, anyone can know the contents of this scene capture type data.

In the present embodiment, the MakerNote data includes shooting mode data. This shooting mode data indicates different values corresponding to different modes set with the mode setting dial 2A. However, since the format of the MakerNote data varies from manufacturer to manufacturer, it is impossible to know the contents of the shooting mode data unless knowing the format of the MakerNote data.

Fig. 5 is a correspondence table that shows the correspondence between the settings of the mode setting dial 2A and the data. The scene capture type tag used in the Exif SubIFD is in conformity with the file format standard, so that scenes that can be specified are limited, and thus data specifying scenes such as "evening scene" cannot be stored in a data section. On the other hand, the MakerNote data can be defined freely, so that data specifying the shooting mode of the mode setting dial 2A can be stored in a data section using a shooting mode tag, which is included in the MakerNote data.

After taking a picture with shooting conditions according to the setting of the mode setting dial 2A, the above-described digital still camera 2 creates an image file such as described above and saves the image file on the memory card 6. This image file contains the scene capture type data and the shooting mode data according to the mode setting dial 2A, which are stored in the Exif SubIFD and the Makernote IFD, respectively, as scene information appended to the image data.

Outline of Automatic Correction Function

When "portrait" pictures are printed, there is a demand for beautiful skin tones. Moreover, when "landscape" pictures are printed, there is a demand that the blue color of the sky should be emphasized and the green color of trees and plants should be emphasized. Thus, the printer 4 of the present embodiment has an automatic correction function of analyzing the image file and automatically performing appropriate correction processing.

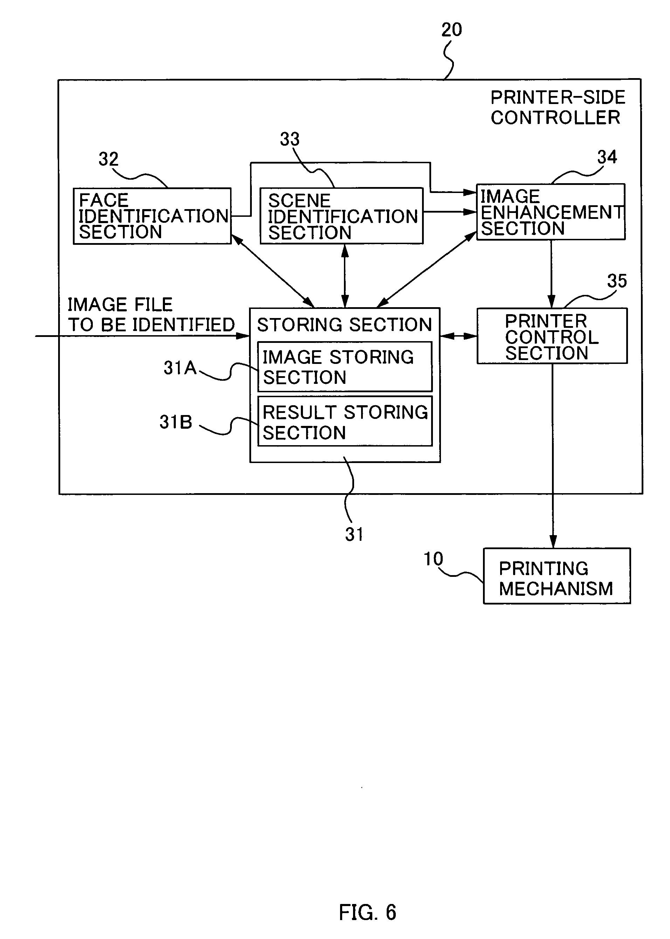

Fig. 6 is an explanatory diagram of the automatic correction function of the printer 4. Each component of the printer-side controller 20 in the diagram is realized with software and hardware.

A storing section 31 is realized with a certain area of the memory 23 and the CPU 22. All or a part of the image file that has been read out from the memory card 6 is expanded in an image storing section 31A of the storing section 31. The results of operations performed by the components of the printer-side controller 20 are stored in a result storing section 31B of the storing section 30.

A face identification section 32 is realized with the CPU 22 and a face identification program stored in the memory 23. The face identification section 32 analyzes the image data stored in the image storing section 31A and identifies whether or not there is a human face. When the face identification section 32 identifies that there is a human face, the image to be identified is identified as belonging to "portrait" scenes. In this case, a scene identification section 33 does not perform scene identification processing. Since the face identification processing performed by the face identification section 32 is similar to the processing that is already widespread, a detailed description thereof is omitted.

The scene identification section 33 is realized with the CPU 22 and a scene identification program stored in the memory 23. The scene identification section 33 analyzes the image file stored in the image storing section 31A and identifies the scene of the image represented by the image data. The scene identification section 33 performs the scene identification processing when the face identification section 32 identifies that there is no human face. As described later, the scene identification section 33 identifies which of "landscape," "evening scene," "night scene," "flower," "autumnal," and "other" images the image to be identified is.

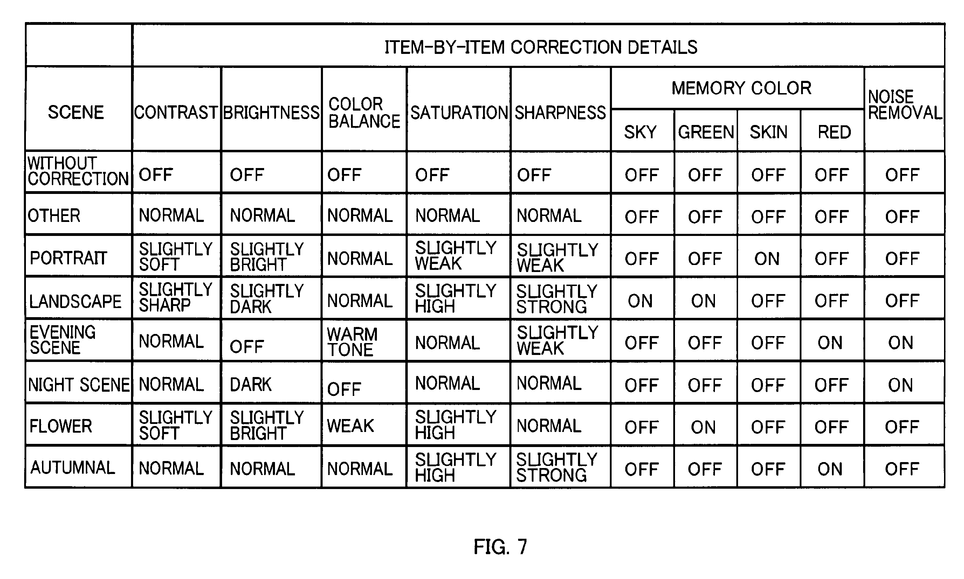

Fig. 7 is an explanatory diagram of the relationship between the scenes of images and correction details.

An image enhancement section 34 is realized with the CPU 22 and an image correction program stored in the memory 23. The image enhancement section 34 corrects the image data in the image storing section 31A based on the identification result (result of identification performed by the face identification section 32 or the scene identification section 33) that has been stored in the result storing section 31B of the storing section 31. For example, when the identification result of the scene identification section 33 is "landscape," the image data is corrected so that blue and green are emphasized. It should be noted that the image enhancement section 34 may correct the image data not only based on the identification result about the scene but also reflecting the contents of the shooting data in the image file. For example, when negative exposure compensation was applied, the image data may be corrected so that a dark image is prevented from being brightened.

The printer control section 35 is realized with the CPU 22, the driving signal generation section 25, the control unit 24, and a printer control program stored in the memory 23. The printer control section 35 converts the corrected image data into print data and makes the printing mechanism 10 print the image.

Scene Identification Processing

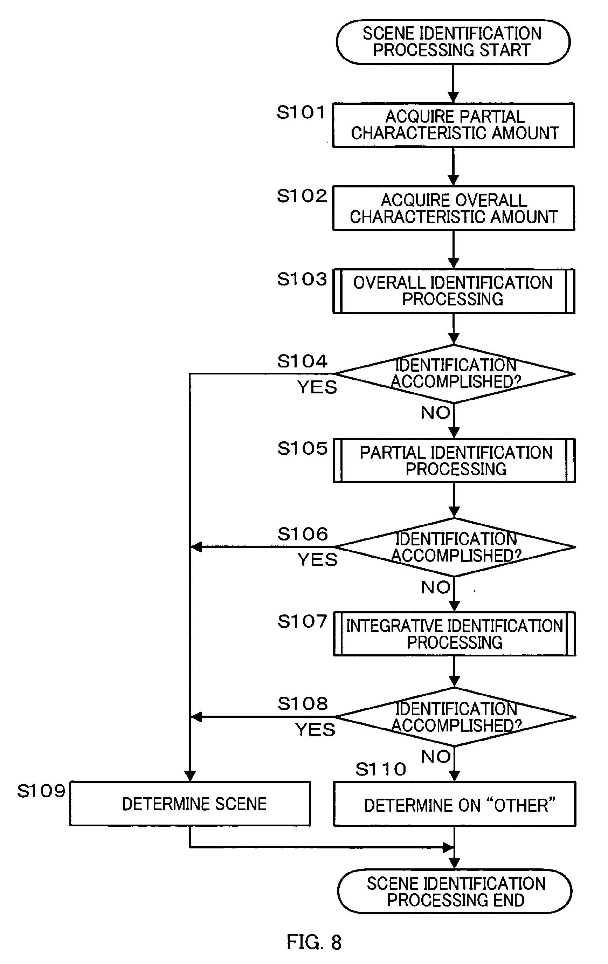

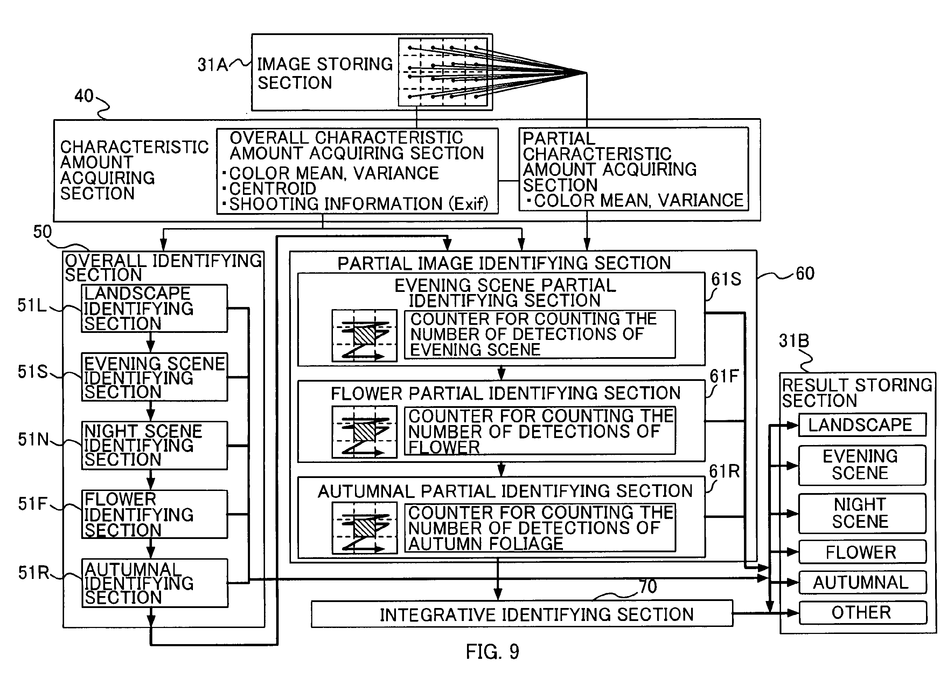

Fig. 8 is a flow diagram of the scene identification processing performed by the scene identification section 33. Fig. 9 is an explanatory diagram of functions of the scene identification section 33. Each component of the scene identification section 33 shown in the diagram is realized with software and hardware.

First, a characteristic amount acquiring section 40 analyzes the image data expanded in the image storing section 31A of the storing section 31 and acquires partial characteristic amounts (S101). Specifically, the characteristic amount acquiring section 40 divides the image data into $8 \times 8 = 64$ blocks, calculates color means and variances of the blocks, and acquires the calculated color means and variances as partial characteristic amounts. It should be noted that every pixel here has data about a tone value in the YCC color space, and a mean value of Y, a mean value of Cb, and a mean value of Cr are calculated for each block and a variance of Y, a variance of Cb, and a variance of Cr are calculated for each block. That is to say, three color means and three variances are calculated as partial characteristic amounts for each block. The calculated color means and variances indicate features of a partial image in each block. It should be noted that it is also possible to calculate mean values and variances in the RGB color space.

Since the color means and variances are calculated for each block, the characteristic amount acquiring section 40 expands portions of the image data corresponding to the respective blocks in a block-by-block order without expanding all of the image data in the image storing section 31A. For this reason, the image storing section 31A may not necessarily have as large a capacity as all of the image data can be expanded.

Next, the characteristic amount acquiring section 40 acquires overall characteristic amounts (S102). Specifically, the characteristic amount acquiring section 40 acquires color means and variances, a centroid, and shooting information of the entire image data as overall characteristic amounts. It should be noted that the color means and variances indicate features of the entire image. The color means, variances, and the centroid of the entire image data are calculated using the partial characteristic amounts acquired in advance. For this reason, it is not necessary to expand the image data again when calculating the overall characteristic amounts, and thus the speed at which the overall characteristic amounts are calculated is increased. It is because the calculation speed is increased in this manner that the overall characteristic amounts are obtained after the partial characteristic amounts although overall identification processing (described later) is performed before partial identification processing (described later). It should be noted that the shooting information is extracted from the shooting data in the image file. Specifically, information such as the aperture value, the shutter speed, and whether or not the flash is fired, is used as the overall characteristic amounts. However, not all of the shooting data in the image file is used as the overall characteristic amounts.

Next, an overall identifying section 50 performs the overall identification processing (S103). The overall identification processing is processing for identifying (estimating) the scene of the image represented by the image data based on the overall characteristic amounts. A detailed description of the overall identification processing is provided later.

When the scene can be identified by the overall identification processing ("YES" in S104), the scene identification section 33 determines the scene by storing the identification result in the result storing section 31B of the storing section 31 (S109) and terminates the scene identification processing. That is to say, when the scene can be identified by the overall identification processing ("YES" in S104), the partial identification processing and integrative identification processing are omitted. Thus, the speed of the scene identification processing is increased.

When the scene cannot be identified by the overall identification processing ("NO" in S104), a partial identifying section 60 then performs the partial identification processing (S105). The partial identification processing is processing for identifying the scene of the entire image represented by the image data based on the partial characteristic amounts. A detailed description of the partial identification processing is provided later.

When the scene can be identified by the partial identification processing ("YES" in S106), the scene identification section 33 determines the scene by storing the identification result in the result storing section 31B of the storing section 31 (S109) and terminates the scene identification processing. That is to say, when the scene can be identified by the partial identification processing ("YES" in S106), the integrative identification processing is omitted. Thus, the speed of the scene identification processing is increased.

When the scene cannot be identified by the partial identification processing ("NO" in S106), an integrative identifying section 70 performs the integrative identification processing (S107). A detailed description of the integrative identification processing is provided later.

When the scene can be identified by the integrative identification processing ("YES" in S108), the scene identification section 33 determines the scene by storing the identification result in the result storing section 31B of the sorting section 31 (S109) and terminates the scene identification processing. On the other hand, when the scene cannot be identified by the integrative identification processing ("NO" in S108), the identification result that the image represented by the image data is an "other" scene (scene other than "landscape, " "evening scene, " "night scene," "flower," or "autumnal") is stored in the result storing section 31B (S110).

Overall Identification Processing

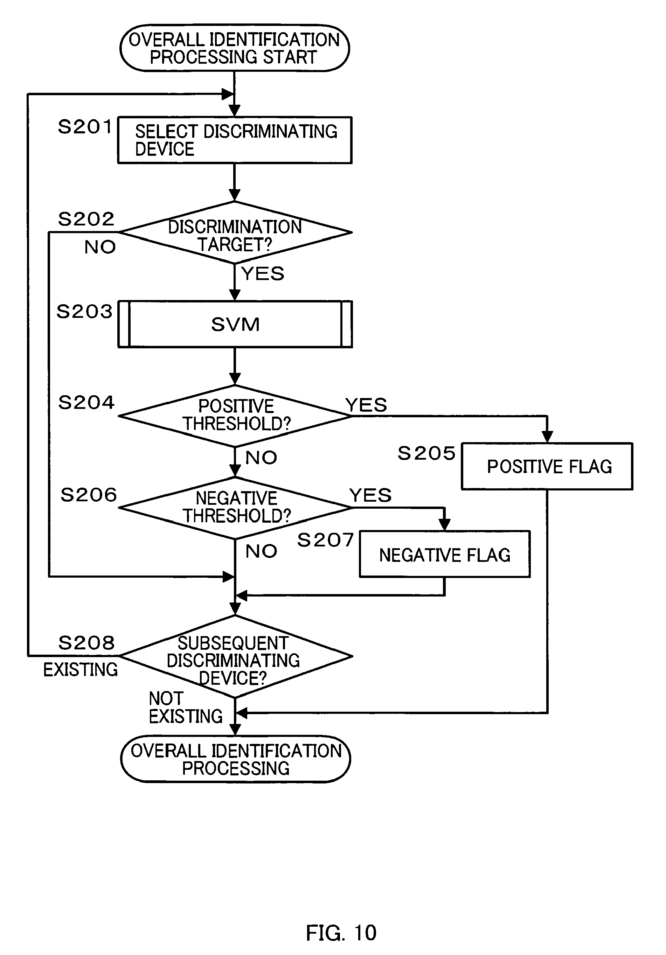

Fig. 10 is a flow diagram of the overall identification processing. Here, the overall identification processing is described also with reference to Fig. 9.

First, the overall identifying section 50 selects one sub-identifying section 51 from a plurality of sub-identifying sections 51 (S201). The overall identifying section 50 is provided with five sub-identifying sections 51 that identify whether or not the image serving as a target of identification (image to be identified) belongs to a specific scene. The five sub-identifying sections 51 identify landscape, evening scene, night scene, flower, and autumnal scenes, respectively. Here, the overall identifying section 50 selects the sub-identifying sections 51 in the order of landscape → evening scene → night scene → flower → autumnal. For this reason, at the start, the sub-identifying section 51 (landscape identifying section 51L) for identifying whether or not the image to be identified belongs to landscape scenes is selected.

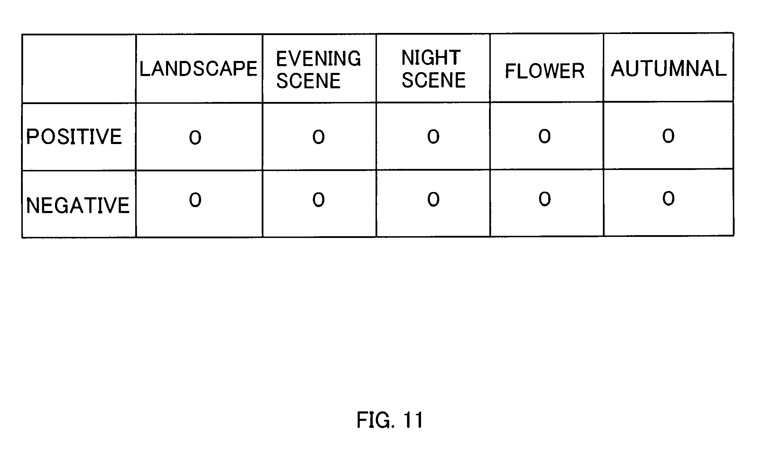

Next, the overall identifying section 50 references an identification target table and determines whether or not to identify the scene using the selected sub-identifying section 51 (S202). Fig. 11 is an explanatory diagram of the identification target table. This identification target table is stored in the result storing section 31B of the storing section 31. At the first stage, all the fields in the identification target table are set to zero. In the process of S202, a "negative" field is referenced, and when this field is zero, it is determined "YES," and when this field is 1, it is determined "NO." Here, the overall identifying section 51 references the "negative" field under the "landscape" column to find that this field is zero and thus determines "YES."

Next, the sub-identifying section 51 calculates a value (evaluation value) according to the probability that the image to be identified belongs to a specific scene based on the overall characteristic amounts (S203). The sub-identifying sections 51 of the present embodiment employ an identification method using a support vector machine (SVM). A description of the support vector machine is provided later. When the image to be identified belongs to a specific scene, the discriminant equation of the sub-identifying section 51 is likely to be a positive value. When the image to be identified does not belong to a specific scene, the discriminant equation of the sub-identifying section 51 is likely to be a negative value. Moreover, the higher the probability that the image to be identified belongs to a specific scene is, the larger the value of the discriminant equation is. Accordingly, a large value of the discriminant equation indicates a high probability that the image to be identified belongs to a specific scene, and a small value of the discriminant equation indicates a low probability that the image to be identified belongs to a specific scene.

Therefore, the value (evaluation value) of the discriminant equation indicates a certainty factor, i.e., the degree to which it is probable that the image to be identified belongs to a specific scene. It should be noted that the term "certainty factor" as used in the following description may refer to the value itself of the discriminant equation or to a precision ratio (described later) that can be obtained from the value of the discriminant equation. The value itself of the discriminant equation or the precision ratio (described later) that can be obtained from the value of the discriminant equation is also an "evaluation value" (evaluation result) according to the probability that the image to be identified belongs to a specific scene.

Next, the sub-identifying section 51 determines whether or not the value of the discriminant equation (the certainty factor) is larger than a positive threshold (S204). When the value of the discriminant equation is larger than the positive threshold, the sub-identifying section 51 determines that the image to be identified belongs to a specific scene.

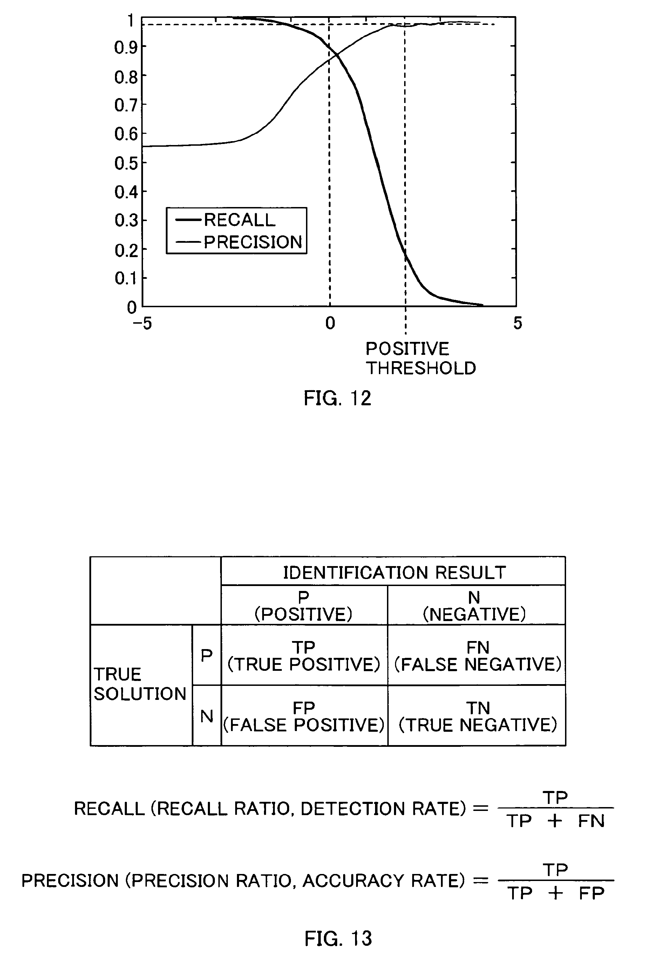

Fig. 12 is an explanatory diagram of the positive threshold in the overall identification processing. In this diagram, the vertical axis represents the positive threshold, and the horizontal axis represents the probability of Recall or Precision. Fig. 13 is an explanatory diagram of Recall and Precision. When the value of the discriminant equation is equal to or more than the positive threshold, the identification result is taken as Positive, and when the value of the discriminant equation is not equal to or more than the positive threshold, the identification result is taken as Negative.

Recall indicates the recall ratio or a detection rate. Recall is the proportion of the number of images identified as belonging to a specific scene in the total number of images of the specific scene. In other words, Recall indicates the probability that, when the sub-identifying section 51 is made to identify an image of a specific scene, the sub-identifying section 51 identifies Positive (the probability that the image of the specific scene is identified as belonging to the specific scene). For example, Recall indicates the probability that, when the landscape identifying section 51L is made to identify a landscape image, the landscape identifying section 51L identifies the image as belonging to landscape scenes.

Precision indicates the precision ratio or an accuracy rate. Precision is the proportion of the number of images of a specific scene in the total number of images identified as Positive. In other words, Precision indicates the probability that, when the sub-identifying section 51 for identifying a specific scene identifies an image as Positive, the image to be identified is the specific scene. For example, Precision indicates the probability that, when the landscape identifying section 51L identifies an image as belonging to landscape scenes, the identified image is actually a landscape image.

As can be seen from Fig. 12, the larger the positive threshold is, the greater Precision is. Thus, the larger the positive threshold is, the higher the probability that an image identified as belonging to, for example, landscape scenes is a landscape image is. That is to say, the larger the positive threshold is, the lower the probability of misidentification is.

On the other hand, the larger the positive threshold is, the smaller Recall is. As a result, for example, even when a landscape image is identified by the landscape identifying section 51L, it is difficult to correctly identify the image as belonging to landscape scenes. When the image to be identified can be identified as belonging to landscape scenes ("YES" in S204), identification with respect to the other scenes (such as evening scenes) is no longer performed, and thus the speed of the overall identification processing is increased. Therefore, the larger the positive threshold is, the lower the speed of the overall identification processing is. Moreover, since the speed of the scene identification processing is increased by omitting the partial identification processing when scene identification can be accomplished by the overall identification processing (S104), the larger the positive threshold is, the lower the speed of the scene identification processing is.

That is to say, too small a positive threshold will result in a high probability of misidentification, and too large a positive threshold will result in a decreased processing speed. In the present embodiment, the positive threshold for landscapes is set to 1.72 in order to set the precision ratio (Precision) to 97.5%.

When the value of the discriminant equation is larger than the positive threshold ("YES" in S204), the sub-identifying section 51 determines that the image to be identified belongs to a specific scene, and sets a positive flag (S205). "Set a positive flag" refers to setting a "positive" field in Fig. 11 to 1. In this case, the overall identifying section 50 terminates the overall identification processing without performing identification by the subsequent sub-identifying sections 51. For example, when an image can be identified as a landscape image, the overall identifying section 50 terminates the overall identification processing without performing identification with respect to evening scenes and the like. In this case, the speed of the overall identification processing can be increased because identification by the subsequent sub-identifying sections 51 is omitted.

When the value of the discriminant equation is not larger than the positive threshold ("NO" in S204), the sub-identifying section 51 cannot determine that the image to be identified belongs to a specific scene, and performs the subsequent process of S206.

Then, the sub-identifying section 51 compares the value of the discriminant equation with a negative threshold (S206). Based on this comparison, the sub-identifying section 51 determines whether or not the image to be identified belongs to a predetermined scene. Such a determination is made in two ways. First, when the value of the discriminant equation of the sub-identifying section 51 with respect to a certain specific scene is smaller than a first negative threshold, it is determined that the image to be identified does not belong to that specific scene. For example, when the value of the discriminant equation of the landscape indentifying section 51L is smaller than the first negative threshold, it is determined that the image to be identified does not belong to landscape scenes. Second, when the value of the discriminant equation of the sub-identifying section 51 with respect to a certain specific scene is larger than a second negative threshold, it is determined that the image to be determined does not belong to a scene different from that specific scene. For example, when the value of the discriminant equation of the landscape identifying section 51L is larger than the second negative threshold, it is determined that the image to be identified does not belong to night scenes.

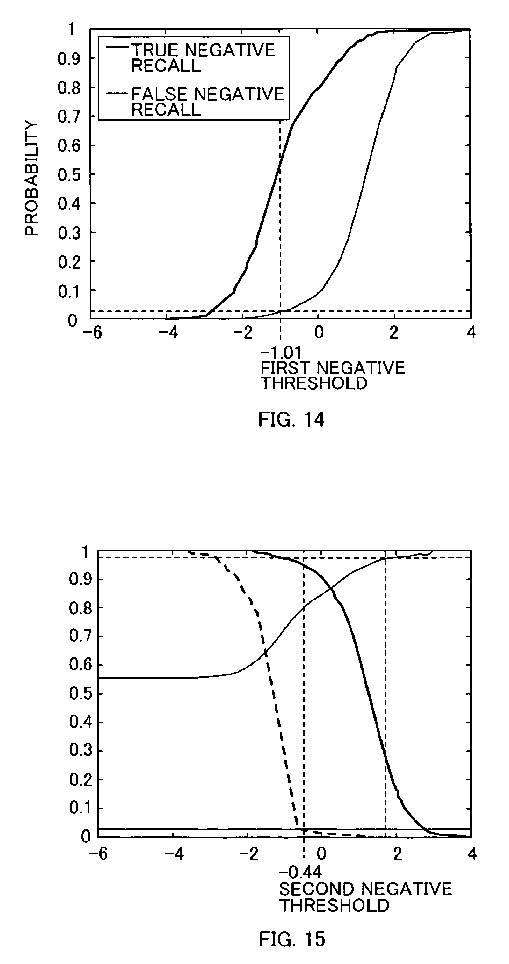

Fig. 14 is an explanatory diagram of the first negative threshold. In this diagram, the horizontal axis represents the first negative threshold, and the vertical axis represents the probability. The graph shown by a bold line represents True Negative Recall and indicates the probability that an image that is not a landscape image is correctly identified as not being a landscape image. The graph shown by a thin line represents False Negative Recall and indicates the probability that a landscape image is misidentified as not being a landscape image.

As can be seen from Fig. 14, the smaller the first negative threshold is, the smaller False Negative Recall is. Thus, the smaller the first negative threshold is, the lower the probability that an image identified as not belonging to, for example, landscape scenes is actually a landscape image becomes. In other words, the probability of misidentification decreases.

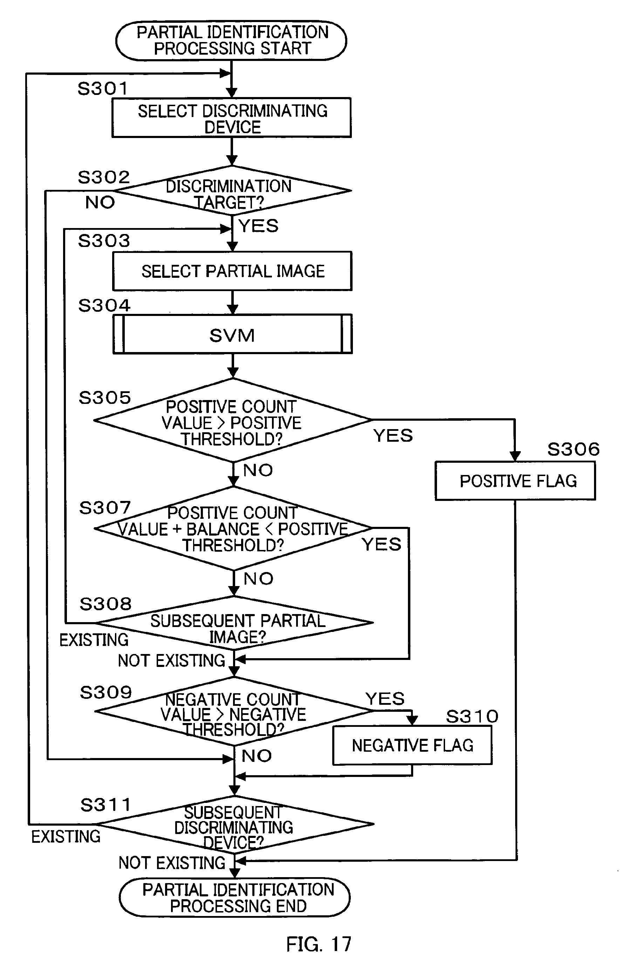

On the other hand, the smaller the first negative threshold is, the smaller True Negative Recall also is. As a result, an image that is not a landscape image is less likely to be identified as a landscape image. Meanwhile, when the image to be identified can be identified as not being a specific scene, processing by a sub-partial identifying section 61 with respect to that specific scene is omitted during the partial identification processing, thereby increasing the speed of the scene identification processing (described later, S302 in Fig. 17). Therefore, the smaller the first negative threshold is, the lower the speed of the scene identification processing is.

That is to say, too large a first negative threshold will result in a high probability of misidentification, and too small a first negative threshold will result in a decreased processing speed. In the present embodiment, the first negative threshold is set to -1.01 in order to set False Negative Recall to 2.5%.

When the probability that a certain image belongs to landscape scenes is high, the probability that this image belongs to night scenes is inevitably low. Thus, when the value of the discriminant equation of the landscape identifying section 51L is large, it may be possible to identify the image as not being a night scene. In order to perform such identification, the second negative threshold is provided.

Fig. 15 is an explanatory diagram of the second negative threshold. In this diagram, the horizontal axis represents the value of the discriminant equation with respect to landscapes, and the vertical axis represents the probability. This diagram shows, in addition to the graphs of Recall and Precision shown in Fig. 12, a graph of Recall with respect to night scenes, which is drawn by a dotted line. When looking at this graph drawn by the dotted line, it is found that when the value of the discriminant equation with respect to landscapes is larger than -0.44, the probability that the image to be identified is a night scene image is 2.5%. In other words, even when the image to be identified is identified as not being a night scene image while the value of the discriminant equation with respect to landscapes is larger than -0.44, the probability of misidentification is no more than 2.5%. In the present embodiment, the second negative threshold is therefore set to -0.44.

When the value of the discriminant equation is smaller than the first negative threshold or when the value of the discriminant equation is larger than the second negative threshold ("YES" in S206), the sub-identifying section 51 determines that the image to be identified does not belong to a predetermined scene, and sets a negative flag (S207). "Set a negative flag" refers to setting a "negative" field in Fig. 11 to 1. For example, when it is determined that the image to be identified does not belong to landscape scenes based on the first negative threshold, the "negative" field under the "landscape" column is set to 1. Moreover, when it is determined that the image to be identified does not belong to night scenes based on the second negative threshold, the "negative" field under the "night scene" column is set to 1.

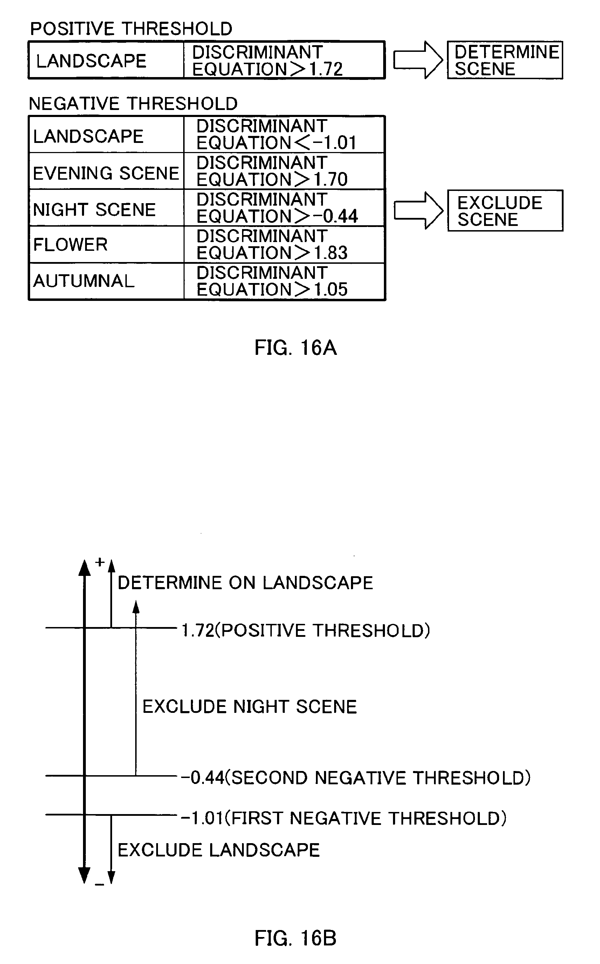

Fig. 16A is an explanatory diagram of the thresholds in the landscape identifying section 51L described above. In the landscape identifying section 51L, a positive threshold and a negative threshold are set in advance. The positive threshold is set to 1.72. The negative threshold includes a first negative threshold and second negative thresholds. The first negative threshold is set to -1.01. The second negative thresholds are set for scenes other than landscapes to respective values.

Fig. 16B is an explanatory diagram of an outline of the processing by the landscape identifying section 51L described above. Here, for the sake of simplicity of description, the second negative thresholds are described with respect to night scenes alone. When the value of the discriminant equation is larger than 1.72 ("YES" in S204), the landscape identifying section 51L determines that the image to be identified belongs to landscape scenes. When the value of the discriminant equation is not larger than 1.72 ("NO" in S204) and larger than -0.44 ("YES" in S206), the landscape identifying section 51L determines that the image to be identified does not belong to night scenes. When the value of the discriminant equation is smaller than -1.01 ("YES" in S206), the landscape identifying section 51L determines that the image to be identified does not belong to landscape scenes. It should be noted that the landscape identifying section 51L also determines with respect to evening and autumn scenes whether the image to be identified does not belong to these scenes based on the second negative thresholds. However, since the second negative threshold with respect to flower is larger than the positive threshold, it is not possible for the landscape identifying section 51L to determine that the image to be identified does not belong to the flower scene.

When it is "NO" in S202, when it is "NO" in S206, or when the process of S207 is finished, the overall identifying section 50 determines whether or not there is a subsequent sub-identifying section 51 (S208). Here, the processing by the landscape identifying section 51L has been finished, so that the overall identifying section0 determines in S208 that there is a subsequent sub-identifying section1 (evening scene identifying section1S).

Then when the process of S205 is finished (when it is determined that the image to be identified belongs to a specific scene) or when it is determined in S208 that there is no subsequent sub-identifying section 51 (when it cannot be determined that the image to be identified belongs to a specific scene), the overall identifying section0 terminates the overall identification processing.

As already described above, when the overall identification processing is terminated, the scene identification section 33 determines whether or not scene identification can be accomplished by the overall identification processing (S104 in Fig. 8). At this time, the scene identification section 33 references the identification target table shown in Fig. 11 and determines whether or not there is 1 in the "positive" field.

When scene identification can be accomplished by the overall identification processing ("YES" in S104), the partial identification processing and the integrative identification processing are omitted. Thus, the speed of the scene identification processing is increased.

Partial Identification Processing

Fig. 17 is a flow diagram of the partial identification processing. The partial identification processing is performed when scene identification cannot be accomplished by the overall identification processing ("NO" in S104 in Fig. 8). As described in the following, the partial identification processing is processing for identifying the scene of the entire image by individually identifying the scenes of partial images into which the image to be identified is divided. Here, the partial identification processing is described also with reference to Fig. 9.

First, the partial identifying section 60 selects one sub-partial identifying section 61 from a plurality of sub-partial identifying sections 61 (S301). The partial identifying section 60 is provided with three sub-partial identifying sections 61. Each of the sub-partial identifying sections 61 identifies whether or not the $8 \times 8 = 64$ blocks of partial images into which the image to be identified is divided belong to a specific scene. The three sub-partial identifying sections 61 here identify evening scenes, flower scenes, and autumnal scenes, respectively. The partial identifying section 60 selects the sub-partial identifying sections 61 in the order of evening scene $\rightarrow$ flower $\rightarrow$ autumnal. Thus, at the start, the sub-partial identifying section 61 (evening scene partial identifying section 61S) for identifying whether or not the partial images belong to evening scenes is selected.

Next, the partial identifying section 60 references the identification target table (Fig. 11) and determines whether or not scene identification is to be performed using the selected sub-partial identifying section 61 (S302). Here, the partial identifying section 60 references the "negative" field under the "evening scene" column in the identification target table, and determines "YES" when there is zero and "NO" when there is 1. It should be noted that when, during the overall identification processing, the evening scene identifying section 1S sets a negative flag based on the first negative threshold or another sub-identifying section 1 sets a negative flag based on the second negative threshold, it is determined "NO" in this step S302. If it is determined "NO", the partial identification processing with respect to evening scenes is omitted, so that the speed of the partial identification processing is increased. However, for convenience of description, it is assumed that the determination result here is "YES."

Next, the sub-partial identifying section 61 selects one partial image from the $8 \times 8 = 64$ blocks of partial images into which the image to be identified is divided (S303).

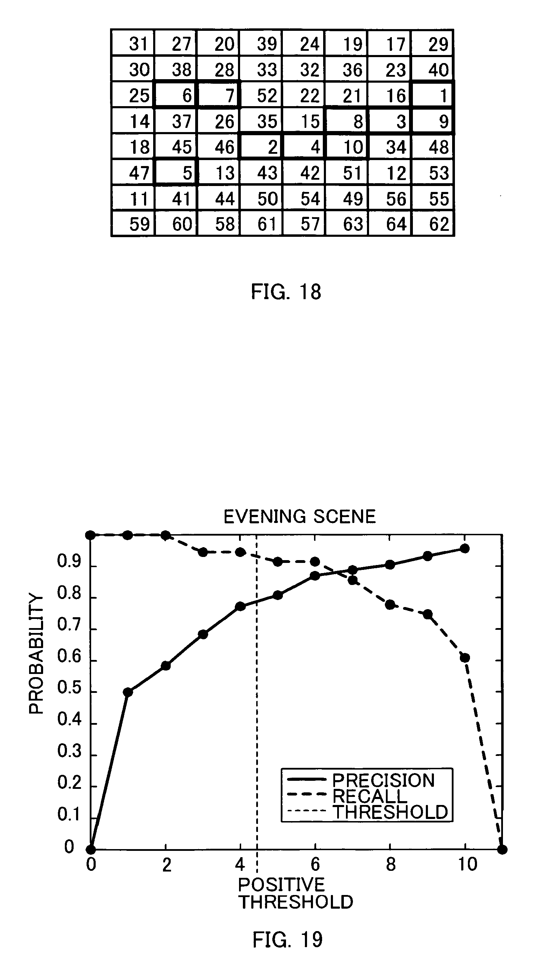

Fig. 18 is an explanatory diagram of the order in which the partial images are selected by the evening scene partial identifying section 61S. In a case where the scene of the entire image is identified based on partial images, it is preferable that the partial images used for identification are portions in which the subject is present. For this reason, in the present embodiment, several thousand sample evening scene images were prepared, each of the evening scene images was divided into $8 \times 8 = 64$ blocks, blocks containing a evening scene portion image (partial image of the sun and sky portion of a evening scene) were extracted, and based on the location of the extracted blocks, the probability that the evening scene portion image exists in each block was calculated. In the present embodiment, partial images are selected in descending order of the existence probability of the blocks. It should be noted that information about the selection sequence shown in the diagram is stored in the memory 23 as a part of the program.

It should be noted that in the case of an evening scene image, the sky of the evening scene often extends from around the center portion to the upper half portion of the image, so that the existence probability increases in blocks located in a region from around the center portion to the upper half portion. In addition, in the case of an evening scene image, the lower 1/3 portion of the image often becomes dark due to backlight and it is impossible to determine based on a single partial image whether the image is an evening scene or a night scene, so that the existence probability decreases in blocks located in the lower 1/3 portion. In the case of a flower image, the flower is often positioned around the center portion of the image, so that the probability that a flower portion image exists around the center portion increases.

Next, the sub-partial identifying section 61 determines, based on the partial characteristic amounts of a partial image that has been selected, whether or not the selected partial image belongs to a specific scene (S304). The sub-partial identifying sections 61 employ a discrimination method using a support vector machine (SVM), as is the case with the sub-identifying sections 1 of the overall identifying section 0. A description of the support vector machine is provided later. When the value of the discriminant equation is a positive value, it is determined that the partial image belongs to the specific scene, and the sub-partial identifying section 61 increments a positive count value. When the value of the discriminant equation is a negative value, it is determined that the partial image does not belong to the specific scene, and the sub-partial identifying section 61 increments a negative count value.

Next, the sub-partial identifying section 61 determines whether or not the positive count value is larger than the positive threshold (S305). The positive count value indicates the number of partial images that have been determined to belong to the specific scene. When the positive count value is larger than the positive threshold ("YES" in S305), the sub-partial identifying section 61 determines that the image to be identified belongs to the specific scene, and sets a positive flag (S306). In this case, the partial identifying section 60 terminates the partial identification processing without performing identification by the subsequent sub-partial identifying sections 61. For example, when the image to be identified can be identified as an evening scene image, the partial identifying section 60 terminates the partial identification processing without performing identification with respect to flower and autumnal. In this case, the speed of the partial identification processing can be increased because identification by the subsequent sub-identifying sections 61 is omitted.

When the positive count value is not larger than the positive threshold ("NO" in S305), the sub-partial identifying section 61 cannot determine that the image to be identified belongs to the specific scene, and performs the process of the subsequent step S307.

When the sum of the positive count value and the number of remaining partial images is smaller than the positive threshold ("YES" in S307), the sub-partial identifying section 61 proceeds to the process of S309. When the sum of the positive count value and the number of remaining partial images is smaller than the positive threshold, it is impossible for the positive count value to be larger than the positive threshold even when the positive count value is incremented by all of the remaining partial images, so that identification using the support vector machine with respect to the remaining partial images is omitted by advancing the process to S309. As a result, the speed of the partial identification processing can be increased.

When the sub-partial identifying section 61 determines "NO" in S307, the sub-partial identifying section 61 determines whether or not there is a subsequent partial image (S308). In the present embodiment, not all of the 64 partial images into which the image to be identified is divided are selected sequentially. Only the top-ten partial images outlined by bold lines in Fig. 18 are selected sequentially. For this reason, when identification of the tenth partial image is finished, the sub-partial identifying section 61 determines in S308 that there is no subsequent partial image. (With consideration given to this point, "the number of remaining partial images" is also determined.)

Fig. 19 shows graphs of Recall and Precision at the time when identification of an evening scene image was performed based on only the top-ten partial images. When the positive threshold is set as shown in this diagram, the precision ratio (Precision) can be set to about 80% and the recall ratio (Recall) can be set to about 90%, so that identification can be performed with high precision.

In the present embodiment, identification of the evening scene image is performed based on only ten partial images. Accordingly, in the present embodiment, the speed of the partial identification processing can be higher than in the case of performing identification of the evening scene image using all of the 64 partial images.

Moreover, in the present embodiment, identification of the evening scene image is performed using the top-ten partial images with high existence probabilities of an evening scene portion image. Accordingly, in the present embodiment, both Recall and Precision can be set to higher levels than in the case of performing identification of the evening scene image using ten partial images that have been extracted regardless of the existence probability.

Furthermore, in the present embodiment, partial images are selected in descending order of the existence probability of an evening scene portion image. As a result, it is more likely to be determined "YES" at an early stage in S305. Accordingly, the speed of the partial identification processing can be higher than in the case of selecting partial images in the order regardless of the degree of the existence probability.

When it is determined "YES" in S307 or when it is determined in S308 that there is no subsequent partial image, the sub-partial identifying section 61 determines whether or not the negative count value is larger than a negative threshold (S309) . This negative threshold has almost the same function as the negative threshold (S206 in Fig. 10) in the above-described overall identification processing, and thus a detailed description thereof is omitted. When it is determined "YES" in S309, a negative flag is set as in the case of S207 in Fig. 10.

When it is "NO" in S302, when it is "NO" in S309, or when the process of S310 is finished, the partial identifying section 60 determines whether or not there is a subsequent sub-partial identifying section 61 (S311). When the processing by the evening scene partial identifying section 61S has been finished, there are remaining sub-partial identifying sections 61, i.e., the flower partial identifying section 61F and the autumnal partial identifying section 61R, so that the partial identifying section 60 determines in S311 that there is a subsequent sub-partial identifying section 61.

Then, when the process of S306 is finished (when it is determined that the image to be identified belongs to a specific scene) or when it is determined in S311 that there is no subsequent sub-partial identifying section 61 (when it cannot be determined that the image to be identified belongs to a specific scene), the partial identifying section 60 terminates the partial identification processing.

As already described above, when the partial identification processing is terminated, the scene identification section 33 determines whether or not scene identification can be accomplished by the partial identification processing (S106 in Fig. 8). At this time, the scene identification section 33 references the identification target table shown in Fig. 11 and determines whether or not there is 1 in the "positive" field.

When scene identification can be accomplished by the partial identification processing ("YES" in S106), the integrative identification processing is omitted. As a result, the speed of the scene identification processing is increased.

Support Vector Machine

Before describing the integrative identification processing, the support vector machine (SVM) used by the sub-identifying sections1 in the overall identification processing and the sub-partial identifying sections 61 in the partial identification processing is described.

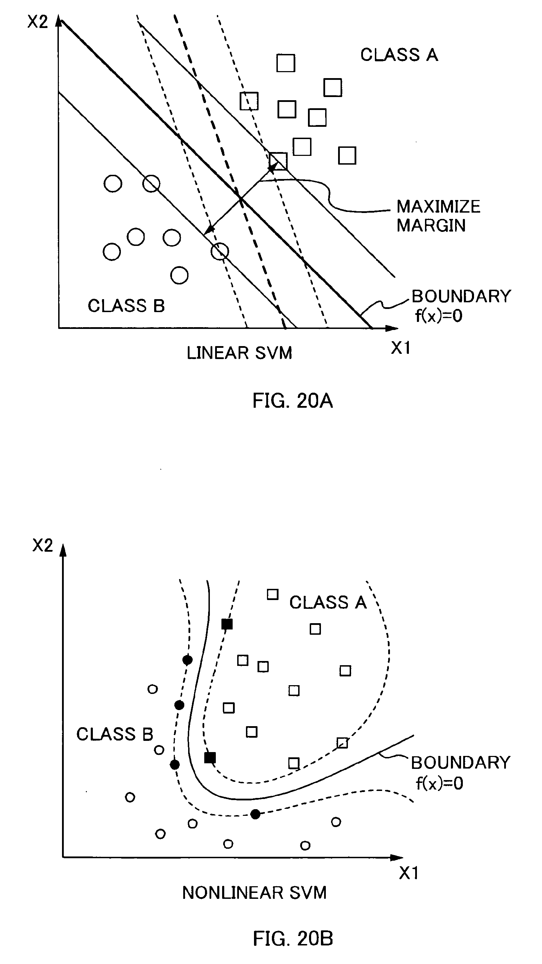

Fig. 20A is an explanatory diagram of discrimination by a linear support vector machine. Here, learning samples are shown in a two-dimensional space defined by two characteristic amounts x1 and x2. The learning samples are divided into two classes A and B. In the diagram, the samples belonging to the class A are represented by circles, and the samples belonging to the class B are represented by squares.

As a result of learning using the learning samples, a boundary that divides the two-dimensional space into two portions is defined. The boundary is defined as $< w \cdot x > + b = 0$ (where $x = (x1, x2)$, w represents a weight vector, and $< w \cdot x >$ represents an inner product of w and x). However, the boundary is defined as a result of learning using the learning samples so as to maximize the margin. That is to say, in this diagram, the boundary is not the bold dotted line but the bold solid line.

Discrimination is performed using a discriminant equation $f(x) = < w \cdot x > + b$. When a certain input x (this input x is separate from the learning samples) satisfies $f(x) > 0$, it is determined that the input x belongs to the class A, and when $f(x) < 0$, it is determined that the input x belongs to the class B.
Here, discrimination is described using the two-dimensional space. However, this is not intended to be limiting (i.e., more than two characteristic amounts may be used). In this case, the boundary is defined as a hyperplane.

There are cases where separation between the two classes cannot be achieved by using a linear function. In such cases, when discrimination with a linear support vector machine is performed, the precision of the discrimination result decreases. To address this problem, the characteristic amounts in the input space are nonlinearly transformed, or in other words, nonlinearly mapped from the input space into a certain feature space, and thus separation in the feature space can be achieved by using a linear function. A nonlinear support vector machine uses this method.

Fig. 20B is an explanatory diagram of discrimination using a kernel function. Here, learning samples are shown in a two-dimensional space defined by two characteristic amounts x1 and x2. When a nonlinear mapping from the input space shown in Fig. 20B is a feature space as shown in Fig. 20A, separation between the two classes can be achieved by using a linear function. When a boundary is defined so as to maximize the margin in this feature space, an inverse mapping of the boundary in the feature space is the boundary shown in Fig. 20B. As a result, the boundary is nonlinear as shown in Fig. 20B.

Since the Gaussian kernel is used in the present embodiment, the discriminant equation f(x) is expressed by the following formula:

Formula 1

$$f(\mathbf{x}) = \sum_i^N w_i \exp(-\sum_j^M \frac{(x_j - y_j)^2}{2\sigma^2})$$

where M represents the number of characteristic amounts, N represents the number of learning samples (or the number of learning samples that contribute to the boundary), $w_i$ represents a weight factor, $y_j$ represents the characteristic amount of the learning samples, and $x_j$ represents the characteristic amount of an input x.

When a certain input x (this input x is separate from the learning samples) satisfies $f(x) > 0$, it is determined that the input x belongs to the class A, and when $f(x) < 0$, it is determined that the input x belongs to the class B. Moreover, the larger the value of the discriminant equation $f(x)$ is, the higher the probability that the input x (this input x is separate from the learning samples) belongs to the class A is. Conversely, the smaller the value of the discriminant equation $f(x)$ is, the lower the probability that the input x (this input x is separate from the learning samples) belongs to the class A is. The sub-identifying sections1 in the overall identification processing and the sub-partial identifying sections 61 in the partial identification processing, which are described above, employ the value of the discriminant equation $f(x)$ of the above-described support vector machine.

It should be noted that evaluation samples are prepared separately from the learning samples. The above-described graphs of Recall and Precision are based on the identification result with respect to the evaluation samples.

Integrative Identification Processing

In the above-described overall identification processing and partial identification processing, the positive threshold in the sub-identifying sections1 and the sub-partial identifying sections 61 is set to a relatively high value to set Precision (accuracy rate) to a rather high level. The reason for this is that when, for example, the accuracy rate of the landscape identifying section 51L of the overall identification section is set to a low level, a problem occurs in that the landscape identifying section 51L misidentifies an autumnal image as a landscape image and terminates the overall identification processing before identification by the autumnal identifying section 51R is performed. In the present embodiment, Precision (accuracy rate) is set to a rather high level, and thus an image belonging to a specific scene is identified by the sub-identifying section 51 (or the sub-partial identifying section 61) with respect to that specific scene (for example, an autumnal image is identified by the autumnal identifying section 51R (or the autumnal partial identifying section 61R)).

However, when Precision (accuracy rate) of the overall identification processing and the partial identification processing is set to a rather high level, the possibility that scene identification cannot be accomplished by the overall identification processing and the partial identification processing increases. To address this problem, in the present embodiment, when scene identification could not be accomplished by the overall identification processing and the partial identification processing, the integrative identification processing described in the following is performed.

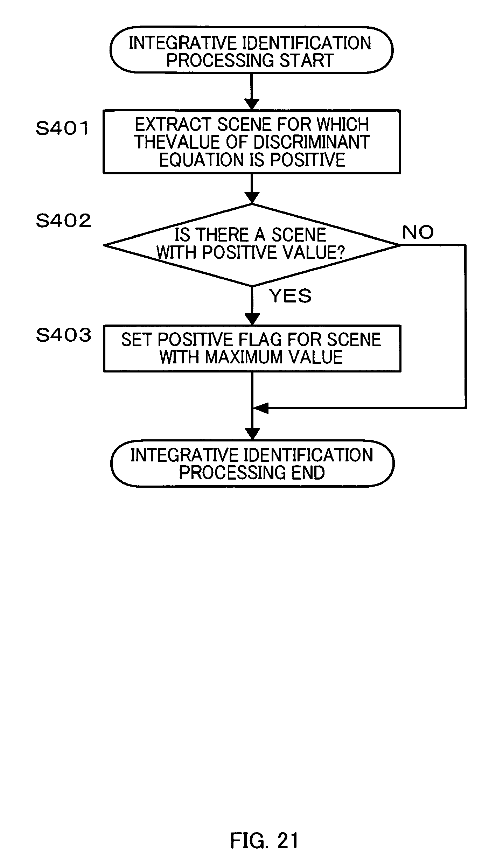

Fig. 21 is a flow diagram of the integrative identification processing. As described in the following, the integrative identification processing is processing for selecting a scene with the highest certainty factor based on the value of the discriminant equation of each sub-identifying section 51 in the overall identification processing.

First, the integrative identifying section 70 extracts, based on the values of the discriminant equations of the five sub-identifying sections 51, a scene for which the value of the discriminant equation is positive (S401). At this time, the value of the discriminant equation calculated by each of the sub-identifying sections 51 during the overall identification processing is used.

Next, the integrative identifying section 70 determines whether or not there is a scene for which the value of the discriminant equation is positive (S402).

When there is a scene for which the value of the discriminant equation is positive ("YES" in S402), a positive flag is set under the column of a scene with the maximum value (S403), and the integrative identification processing is terminated. Thus, it is determined that the image to be identified belongs to the scene with the maximum value.

On the other hand, when there is no scene for which the value of the discriminant equation is positive ("NO" in S402), the integrative identification processing is terminated without setting a positive flag. Thus, there is still no scene for which 1 is set in the "positive" field of the identification target table shown in Fig. 11. That is to say, which scene the image to be identified belongs to could not be identified.

As already described above, when the integrative identification processing is terminated, the scene identification section 33 determines whether or not scene identification can be accomplished by the integrative identification processing (S108 in Fig. 8). At this time, the scene identification section 33 references the identification target table shown in Fig. 11 and determines whether or not there is 1 in the "positive" field. When it is determined "NO" in S402, it is also determined "NO" in S108.

Scene Information Correction

Outline

As described above, the user can set a shooting mode using the mode setting dial 2A. Then, the digital still camera 2 determines shooting conditions (exposure time, ISO sensitivity, etc.) based on, for example, the set shooting mode and the result of photometry when taking a picture and photographs the subject on the determined shooting conditions. After taking a picture, the digital still camera 2 stores shooting data indicating the shooting conditions when the picture was taken in conjunction with image data in the memory card 6 as an image file.

There are instances where the user forgets to set the shooting mode and thus a picture is taken while a shooting mode unsuitable for the shooting conditions remains set. For example, a daytime scene may be photographed while the night scene mode remains set. As a result, in this case, although the image data in the image file is an image of the daytime scene, data indicating the night scene mode is stored in the shooting data (for example, the scene capture type data shown in Fig.5 is set to "3").

On the other hand, some printers do not have the above-described scene identification processing function but perform automatic correction of the image data based on the shooting data in the image file. If the image file of a picture taken with an unsuitable shooting mode is printed by such a printer, the image data is corrected based on the wrong shooting data.

To address this problem, in the present embodiment, when the scene identification processing result does not match the scene indicated by scene information (scene capture type data and shooting mode data) in the image file, the scene of the scene identification processing result is stored as supplemental data in the image file. Regarding the method for storing the scene of the scene identification processing result in the image file, a method of changing the original scene information and a method of adding the scene of the scene identification processing result while leaving the original scene information unchanged can be used.

As a result, when the user performs printing using another printer, the image data is corrected appropriately even when a printer not having the scene identification processing function but performing the automatic correction processing is used.

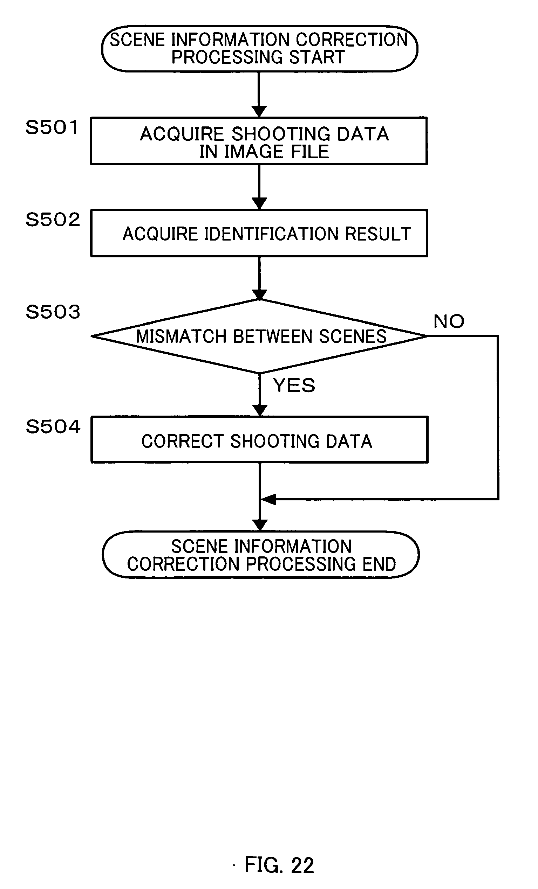

Fig. 22 is a flow diagram of the scene information correction processing of the present embodiment. This scene information correction processing is realized by the CPU 22 by executing a scene information correction program stored in the memory 23.

The scene information correction processing is performed after the above-described scene identification processing. However, the scene information correction processing may be performed before, during, or after printing by the printer 4.

First, the printer-side controller 20 acquires the shooting data in the image file (S501). Specifically, the printer-side controller 20 acquires the scene capture type data (Exif SubIFD area) and the shooting mode data (Makernote IFD area), which are the supplemental data in the image file. Thus, the printer-side controller 20 can analyze the scene indicated by the supplemental data in the image file.

Next, the printer-side controller 20 acquires the identification result (S502). The identification result includes the result of face identification made by the above-described face identification section 32 and the result of scene identification made by the above-described scene identification section 33. Thus, the printer-side controller 20 can make an estimation of which one of the scenes "portrait," "landscape, " "evening scene," "night scene," "flower," "autumnal," and "other" the image data in the image file belongs to.

Next, the printer-side controller 20 compares the scene indicated by the supplemental data with the estimated scene (S503). When there is no mismatch between the two scenes ("NO" in S503), the scene information correction processing is terminated.

When there is a mismatch between the two scenes ("YES" in S503), the printer-side controller 20 corrects the shooting data in the image file in the memory card 6 (S504). Thus, when the user removes the memory card 6 from the printer 4 of the present embodiment and inserts the memory card 6 into another printer, the image data is corrected appropriately even when this printer is a printer not having the scene identification processing function but performing the automatic correction processing.

There are various possible forms of the processes of S503 and S504 described above. Hereinafter, examples of the processes of S503 and S504 are described.

Example 1: Change of Scene Capture Type Data

In the following description, the printer-side controller 20 changes the scene capture type data in the image file.

In S503 above, the printer-side controller 20 compares the scene capture type data, which is the supplemental data in the image file, with the scene identification processing result. When the scene capture type data acquired in S501 indicates "portrait, " "landscape, " or "night scene," and the identification result acquired in S502 is "portrait, " "landscape, " or "night scene," it is possible to determine whether or not there is a mismatch between the two scenes.

When the scene capture type data acquired in S501 is none of "portrait," "landscape," and "night scene," for example, when the scene capture type data is "0" (see Fig. 5), it is not possible to specify the scene based on the scene capture type data, so that it is not possible to determine whether or not there is a mismatch between the two scenes, and thus it is determined "NO" in S503. Since the scene capture type data is standardized data, scenes that can be specified are limited, and thus the scene capture type data may tend to be none of "portrait, " "landscape," and "night scene."

Moreover, when the identification result acquired in S502 is none of "portrait," "landscape," and "night scene," there is no scene capture type data corresponding to the identification result, so that it is not possible to determine whether or not there is a mismatch between the two scenes, and thus it is determined "NO" in S503. For example, when the identification result is "evening scene, " there is no corresponding scene capture type data, so that it is not possible to determine whether or not there is a mismatch between the two scenes, and thus it is determined "NO" in S503. Furthermore, in such a case (for example, in a case where the identification result is "evening scene"), there is no necessity to determine whether or not there is a mismatch because it is impossible to change the scene capture type data in accordance with the identification result.

When the scene capture type data acquired in S501 indicates "portrait," "landscape," or "night scene" and the identification result acquired in S502 is "portrait," "landscape," or "night scene," the printer-side controller 20 determines whether or not the two scenes match. Then, when the two scenes match ("NO" in S503), the scene information correction processing is terminated. On the other hand, when the two scenes do not match, the printer-side controller 20 changes the scene capture type data in the image file. For example, when the identification result is "night scene" although the scene capture type data indicates "landscape," the printer-side controller 20 changes the scene capture type data from "landscape" to "night scene" (changes the scene capture type data from "1" to "3").

According to this example, the determination about a mismatch between the two scenes is made based on the scene capture type data. Since the scene capture type data is standardized data, the printer 4 can ascertain the contents of the scene capture type data irrespective of the manufacturer of the digital still camera 2 used in taking a picture. Thus, this example has versatility. However, since scenes that can be specified by the scene capture type data are limited, there is also a limitation on the extent to which the correction can be made.

Example 2: Change of Shooting Mode Data

It is also possible to make a determination about a mismatch between the two scenes based on the shooting mode data, which is the MakerNote data. In this case, the printer-side controller 20 changes the shooting mode data.

In S503 above, the printer-side controller 20 compares the shooting mode data, which is the supplemental data in the image file, with the scene identification processing result. When the shooting mode data acquired in S501 indicates "portrait," "landscape," "evening scene," or "night scene" and the identification result acquired in S502 is "portrait," "landscape," "evening scene," or "night scene," it is possible to determine whether or not there is a mismatch between the two scenes.

It should be noted that when the shooting mode data acquired in S501 indicates none of "portrait," "landscape," "evening scene," and "night scene," for example, when the shooting mode data is "3 (close-up)" (see Fig. 5), the comparison with the identification result cannot be performed, so that it is not possible to determine whether or not there is a mismatch between the two scenes, and thus it is determined "NO" in S503.

Moreover, when the identification result acquired in S502 is none of "portrait," "landscape," "evening scene," and "night scene," there is no shooting mode data corresponding to the identification result, so that it is not possible to determine whether or not there is a mismatch between the two scenes, and thus it is determined "NO" in S503. For example, when the identification result is "flower," there is no corresponding shooting mode data, so that it is not possible to determine whether or not there is a mismatch between the two scenes, and thus it is determined "NO" in S503. In addition, when the identification result is "flower" or "autumnal," there is no necessity to determine whether or not there is a mismatch because it is impossible to change the shooting mode data to "flower" or "autumnal."

When the shooting mode data acquired in S501 indicates "portrait," "landscape," "evening scene," or "night scene" and the identification result acquired in S502 is "portrait," "landscape," "evening scene," or "night scene," the printer-side controller 20 determines whether or not the two scenes match. Then, when the two scenes match ("NO" in S503), the scene information correction processing is terminated. On the other hand, when the two scenes do not match, the printer-side controller 20 changes the shooting mode data in the image file. For example, when the identification result is "evening scene" although the shooting mode data indicates "landscape," the printer-side controller 20 changes the shooting mode data from "landscape" to "evening scene."

According to this example, the determination about a mismatch between the two scenes is made based on the shooting mode data. Since the shooting mode data is the MakerNote data, the type of the data can be freely defined by manufacturers, so that there are many types of scenes that can be specified. For this reason, in this example, it is possible to perform comparison and correction also with respect to "evening scene," for which comparison and correction cannot be performed in the example described above. However, since the shooting mode data is the MakerNote data, the printer-side controller 20 requires an analysis program for analyzing the data storage format of the Makernote IFD area. Moreover, the data storage format of the Makernote IFD area differs from manufacturer to manufacturer, and thus it is required to prepare multiple analysis programs so as to support various storage formats.

Example 3: Change of Scene Information with Consideration Given to Certainty Factor

A comparison between a case where scene identification is accomplished by the overall identification processing and a case where scene identification is accomplished by the partial identification processing indicates that the former case results in a high certainty factor and the latter case results in a low certainty factor. Specifically, a comparison between a case where an image is identified as "landscape" by the overall identification processing and a case where an image is identified as "landscape" by the integrative identification processing indicates that the former case provides the lower probability of erroneous discrimination. The reason for this is that Precision (accuracy rate) is set to a rather high level in the overall identification processing, while the integrative identification processing is performed in such cases where scene identification cannot be accomplished by the overall identification processing and the partial identification processing.

That is to say, even when the identification results are the same, i.e., "landscape," the certainty factors may differ from each other.

When there is a mismatch between the scene indicated by the supplemental data in the image file and the scene of the identification result, if the supplemental data is changed regardless of a low certainty factor, misidentification, if it occurs, has a great influence.

To address this problem, it is also possible that, in S503 of Fig. 22 described above, it is determined "YES" only when the certainty factor is higher than a predetermined threshold.

Example 4: Addition of Scene Information

In the foregoing two examples, the scene capture type data or the shooting mode data, which has been already stored in the image file, is changed (rewritten). However, instead of changing the original data, scene information may be added to the image file while the original data is left unchanged. That is to say, when it is "YES" in S503, the printer-side controller 20 may add the identification result to the supplemental data in the image file.

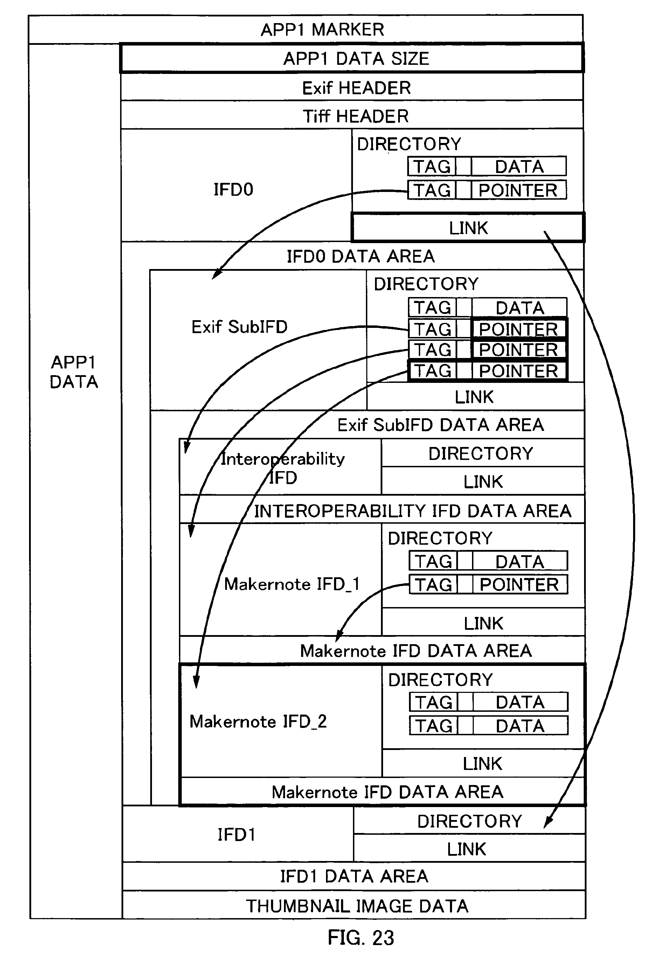

Fig. 23 is an explanatory diagram of a configuration of the APP1 segment when the identification result is added to the supplemental data. In Fig. 23, portions different from those of the image file shown in Fig. 3 are indicated by a bold line.

When compared with the image file shown in Fig. 3, the image file shown in Fig. 23 contains an additional Makernote IFD thereto. Information about the identification result is stored in this second Makernote IFD.

Moreover, a new directory entry is also added to the Exif SubIFD. The additional directory entry is constituted by a tag indicating the second Makernote IFD and a pointer indicating the storage location of the second Makernote IFD.

Furthermore, since the storage location of the Exif SubIFD data area is displaced as a result of adding the new directory entry to the Exif SubIFD, the pointer indicating the storage location of the Exif SubIFD data area is changed.

Furthermore, since the IFD1 area is displaced as a result of adding the second Makernote IFD, the link located in the IFD0 and indicating the position of the IFD1 is also changed. Furthermore, since there is a change in the size of the data area of APP1 as a result of adding the second Makernote IFD, the size of the data area of APP1 is also changed.

According to this example, the necessity to erase the original shooting data can be avoided. Moreover, information about "flower" and "autumnal" scenes also can be stored in the supplemental data in the image file.

Example 5: Addition of Certainty Factor Data

Since data can be stored in the Makernote IFD area in any format, information about the certainty factor may be stored therein in addition to the information about the scene. Thus, when the printer 4 corrects the image data based on the supplemental data, it is possible for the printer 4 to correct the image data with consideration given to the certainty factor.

When a "landscape" image data is corrected, it is preferable that the image data is corrected in a manner that blue and green are emphasized. On the other hand, when an "autumnal" image data is corrected, it is preferable that the image data is corrected in a manner that red and yellow are emphasized. Here, if an autumnal image is misidentified as "landscape, " complementary colors of the colors to be actually emphasized are emphasized, and thus the correction may result in a very poor quality image. For this reason, it is preferable that the degree of correction is lowered in the case of a low certainty factor.

Accordingly, when data about the certainty factor (certainty factor data) is added to the image file, it is possible for the printer to adjust, according to the certainty factor, the degree of correction of colors to be emphasized. As a result, it is possible to prevent a very poor quality image from being outputted when misidentification occurs.

It should be noted that the value of the discriminant equation may be used as the certainty factor data as it is, or the value of Precision corresponding to the value of the discriminant equation may be used as the certainty factor data. In the latter case, it is required to prepare a table that gives the relationship between the value of the discriminant equation and the value of Precision.

Other Embodiments

In the foregoing, an embodiment was described using, for example, the printer. However, the foregoing embodiment is for the purpose of elucidating the present invention and is not to be interpreted as limiting the present invention. It goes without saying that the present invention can be altered and improved without departing from the gist thereof and includes functional equivalents. In particular, the present invention also includes embodiments described below.

Regarding the Printer

In the above-described embodiment, the printer 4 performs the scene identification processing, the scene information correction processing, and the like. However, it is also possible that the digital still camera 4 performs the scene identification processing, the scene information correction processing, and the like. Moreover, the information processing apparatus that performs the above-described scene identification processing and scene information correction processing is not limited to the printer 4 and the digital still camera 2. For example, an information processing apparatus such as a photo storage device for retaining a large number of image files may perform the above-described scene identification processing and scene information correction processing. Naturally, a personal computer or a server located on the Internet may perform the above-described scene identification processing and scene information correction processing.

Regarding the Image File

The above-described image file was an Exif format file. However, the image file format is not limited to this. Moreover, the above-described image file is a still image file. However, the image file may be a moving image file. In effect, as long as the image file contains the image data and the supplemental data, it is possible to perform scene information correction processing as described above.

Regarding the Support Vector Machine

The above-described sub-identifying sections 51 and sub-partial identifying sections 61 employ the identification method using the support vector machine (SVM). However, the method for identifying whether or not the image to be identified belongs to a specific scene is not limited to the method using the support vector machine. For example, it is also possible to employ pattern recognition techniques, such as a neural network.

Summary

(1) In the foregoing embodiment, the printer-side controller 20 acquires the scene capture type data and the shooting mode data, which are the scene information, from the supplemental data appended to the image data (S501). Moreover, the printer-side controller 20 acquires the identification result of the scene identification processing (see Fig. 8) (S502).

The scene indicated by the scene capture type data and the shooting mode data may not match the scene of the identification result of the scene identification processing. Such a situation is likely to occur, for example, when the user takes a picture using the digital still camera 2 while forgetting to set the shooting mode. In such a situation, when direct printing is performed by a printer not having the scene identification processing function but performing the automatic correction processing of the image data, the image data is corrected based on the wrong shooting data.

To address this problem, in the foregoing embodiment, when there is a mismatch between the two scenes, the printer-side controller 20 stores the scene of the scene identification processing result in the image file as the supplemental data.

(2) In Example 1 and Example 2 above, when the scene indicated by the scene capture type data or the shooting mode data does not match the scene of the identification result of the scene identification processing, the scene capture type data or the shooting mode data is changed (rewritten). As a result, when the user performs printing using another printer, the image data is corrected appropriately even when a printer not having the scene identification processing function but performing the automatic correction processing is used.

(3) It should be noted that, as described in Example 4 above, instead of changing the original data, it is also possible to add the scene of the scene identification processing result while leaving the original scene unchanged. This method can avoid the necessity to erase the original data.

(4) In Example 5 above, at the time when the scene of the scene identification processing result is stored in the image file as the supplemental data, the certainty factor data (evaluation result) is also stored therein. As a result, the image file has data with which it is possible to prevent a very poor quality image from being outputted when misidentification occurs.

(5) In the above-described scene identification processing, characteristic amounts indicating characteristics of an image represented by the image data are acquired in S101 and S102 (see Fig. 8). It should be noted that the characteristic amounts include color means, variances, and the like. Then, in the above-described scene identification processing, scene identification is performed based on the characteristic amounts in S103 to S108.

(6) In the above-described scene identification processing, when scene identification cannot be accomplished by the overall identification processing ("NO" in S105), the partial identification processing is performed (S106). On the other hand, when scene identification can be accomplished by the overall identification processing ("YES" in S105), the partial identification processing is not performed. As a result, the speed of the scene identification processing is increased.

(7) In the above-described overall identification processing, the sub-identifying section 51 calculates the value of the discriminant equation (corresponding to the evaluation value), and when this value is larger than the positive threshold (corresponding to the first threshold) ("YES" in S204), the image to be identified is identified as a specific scene (S205). On the other hand, when the value of the discriminant equation is smaller than the first negative threshold (corresponding to the second threshold) ("YES" in S206), a negative flag is set (5207), and in the partial identification processing, the partial identification processing with respect to that specific scene is omitted (S302).

For example, during the overall identification processing, when the value of the discriminant equation of the evening scene identifying section 51S is smaller than the first negative threshold ("YES" in S206), the probability that the image to be identified is an evening scene image is already low, so that there is no point in using the evening scene partial identifying section 61S during the partial identification processing. Thus, during the overall identification processing, when the value of the discriminant equation of the evening scene identifying section 51S is smaller than the first negative threshold ("YES" in S206), the "negative" field under the "evening scene" column in Fig. 11 is set to 1 (S207), and processing by the evening scene partial identifying section 61S is omitted ("NO" in S302) during the partial identification processing. As a result, the speed of the scene identification processing is increased (see also Fig. 16A and Fig. 16B).

(8) In the above-described overall identification processing, identification processing using the landscape identifying section 51L (corresponding to the first scene identification step) and identification processing using the night scene identifying section 51N (corresponding to the second scene identification step) are performed.

A high probability that a certain image belongs to landscape scenes inevitably means a low probability that the image belongs to night scenes. Therefore, when the value of the discriminant equation (corresponding to the evaluation value) of the landscape identifying section L is large, it may be possible to identify the image as not being a night scene.

Thus, in the foregoing embodiment, the second negative threshold (corresponding to the third threshold) is provided (see Fig. 16B). When the value of the discriminant equation of the landscape identifying section 51L is larger than the negative threshold (-0.44) for night scenes ("YES" at S206), the "negative" field under the "night scene" column in Fig. 11 is set to 1 (S207), and processing by the night scene identifying section 51N is omitted ("NO" in S202) during the overall identification processing. As a result, the speed of the scene identification processing is increased.

(9) The above-described printer 4 (corresponding to the information processing apparatus) includes the printer-side controller 20 (see Fig. 2). The printer-side controller 20 acquires the scene capture type data and the shooting mode data, which are the scene information, from the supplemental data appended to the image data (S501). Moreover, the printer-side controller 20 acquires the identification result of the scene identification processing (see Fig. 8) (S502). When the scene indicated by the scene capture type data and the shooting mode data does not match the scene of the identification result of the scene identification processing, the printer-side controller 20 stores the scene of the scene identification processing result in the image file as the supplemental data.

As a result, when the user performs printing using another printer, the image data is corrected appropriately even when a printer not having the scene identification processing function but performing the automatic correction processing is used.

(10) The above-described memory 23 has a program stored therein, which makes the printer 4 execute the processes shown in Fig. 8. That is to say, this program has code for acquiring the scene information indicating the scene of the image data from the supplemental data appended to the image data, code for identifying the scene of the image represented by the image data based on the image data, and code for storing the identified scene in the supplemental data when there is a mismatch between the scene indicated by the scene information and the identified scene.

Although the preferred embodiment of the present invention has been described in detail, it should be understood that various changes, substitutions and alterations can be made therein without departing from spirit and scope of the inventions as defined by the appended claims.

**Claims**

1. An information processing method, comprising:

   acquiring scene information of image data from supplemental data appended to the image data;
   identifying a scene of an image represented by the image data based on the image data; and
   storing the identified scene in the supplemental data when there is a mismatch between a scene indicated by the scene information and the scene identified by identifying the scene of the image.

2. An information processing method according to claim 1,
   wherein storing the identified scene in the supplemental data includes rewriting the scene indicated by the scene information to the identified scene.

3. An information processing method according to claim 1,
   wherein storing the identified scene in the supplemental data includes storing the identified scene in the supplemental data while leaving the scene information unchanged.

4. An information processing method according to any of claims 1 to 3,
   wherein storing the identified scene in the supplemental data includes storing, in conjunction with the identified scene, an evaluation result according to an accuracy rate of an identification result in the supplemental data.

5. An information processing method according to any of claims 1 to 4,
   wherein identifying a scene of an image represented by the image data includes
   characteristic amount acquisition of acquiring a characteristic amount indicating a characteristic of the image, and
   scene identification of identifying the scene of the image based on the characteristic amount.

6. An information processing method according to claim 5,
   wherein the characteristic amount acquisition includes
   acquiring an overall characteristic amount indicating a characteristic of the image in its entirety, and
   acquiring a partial characteristic amount indicating a characteristic of a partial image contained in the image, and
   the scene identification includes
   an overall identification of identifying the scene of the image based on the overall characteristic amount, and
   a partial identification of identifying the scene of the image based on the partial characteristic amount, and
   wherein when the scene of the image represented by the image data cannot be identified in the overall identification, the partial identification is performed, and
   when the scene of the image can be identified in the overall identification, the partial identification is not performed.

7. An information processing method according to claim 6,
   wherein the overall identification includes
   calculating an evaluation value according to a probability that the image is a specific scene based on the overall characteristic amount, and
identifying the image as the specific scene when the evaluation value is larger than a first threshold, and
the partial identification includes identifying the image as the specific scene based on the partial characteristic amount, and
wherein when the evaluation value in the overall identification is smaller than a second threshold, the partial identification is not performed.

8. An information processing method according to claim 5,
wherein the scene identification includes
a first scene identification of identifying the image as a first scene based on the characteristic amount, and
a second scene identification of identifying the image as a second scene that is different from the first scene based on the characteristic amount, and
the first scene identification includes
calculating an evaluation value according to a probability that the image is the first scene based on the characteristic amount, and
identifying the image as the first scene when the evaluation value is larger than a first threshold, and
wherein in the scene identification, when the evaluation value in the first identification is larger than a third threshold, the second scene identification is not performed.

9. An information processing apparatus comprising:

a scene information acquisition section that acquires scene information indicating a scene of image data from supplemental data appended to the image data;
a scene identifying section that identifies a scene of an image represented by the image data based on the image data; and
a supplemental data storing section that stores an identified scene in the supplemental data when there is a mismatch between a scene indicated by the scene information and the scene identified by the scene identifying section.

10. A program comprising:

a first program code that makes an information processing apparatus acquire scene information indicating a scene of image data from supplemental data appended to the image data;
a second program code that makes the information processing apparatus identify a scene of an image represented by the image data based on the image data; and
a third program code that makes the information processing apparatus store the identified scene in the supplemental data when there is a mismatch between the scene indicated by the scene information and the scene identified by identifying the scene of the image.

2A

AUTO

4

21

6

2

FIG. 1

6

20

PRINTER-SIDE
CONTROLLER

22    23

21    MEMORY
SLOT    CPU    MEMORY    I/F

25

24    CONTROL
UNIT    DRIVING SIGNAL
GENERATION
SECTION

10    12

13    SENSOR    HEAD
CONTROL
SECTION

MOTOR    14    11

PRINTING MECHANISM    HEAD

FIG. 2

| SOI |
| --- |
| APP1 |
| SOS |
| IMAGE DATA |
| EOI |

| APP1 MARKER |
| --- |

| APP1 DATA | APP1 DATA SIZE |
| | Exif HEADER |
| | Tiff HEADER |
| | IFD0 ... DIRECTORY (TAG DATA / TAG POINTER) LINK |
| | IFD0 DATA AREA |
| | Exif SubIFD ... DIRECTORY (TAG DATA / TAG POINTER / TAG POINTER) LINK |
| | Exif SubIFD DATA AREA |
| | Interoperability IFD ... DIRECTORY / LINK |
| | INTEROPERABILITY IFD DATA AREA |
| | Makernote IFD ... DIRECTORY (TAG DATA / TAG POINTER) LINK |
| | Makernote IFD DATA AREA |
| | IFD1 ... DIRECTORY / LINK |
| | IFD1 DATA AREA |
| | THUMBNAIL IMAGE DATA |

FIG. 3

| TAG NAME |
| --- |
| TITLE |
| MAKE |
| MODEL |
| RESOLUTION IN X DIRECTION |
| RESOLUTION IN Y DIRECTION |
| ⋮ |
| COPYRIGHT INFORMATION |
| ExifIFDPointer |

FIG. 4A

| TAG NAME |
| --- |
| EXPOSURE TIME |
| LENS F NUMBER |
| EXPOSURE CONTROL MODE |
| ISO SENSITIVITY |
| Exif VERSION |
| ⋮ |
| LIGHT SOURCE |
| FLASH |
| LENS FOCAL LENGTH |
| MakerNote |
| ⋮ |
| 35 mm EQUIVALENT LENS FOCAL LENGTH |
| SCENE CAPTURE TYPE |
| ⋮ |

FIG. 4B

| SETTING (MODE NAME) | | SCENE CAPTURE TYPE DATA (Exif SubIFD AREA) | SHOOTING MODE DATA (Makernote IFD AREA) |
| --- | --- | --- | --- |
| AUTO | AUTO | 0 | 0 |
| | PORTRAIT | 2 | 1 |
| | LANDSCAPE | 1 | 2 |
| | CLOSE-UP | 0 | 3 |
| | SPORT | 0 | 4 |
| | EVENING SCENE | 0 | 5 |
| | NIGHT SCENE | 3 | 6 |
| ⋮ | | ⋮ | ⋮ |

FIG. 5

FIG. 6

| SCENE | ITEM-BY-ITEM CORRECTION DETAILS | | | | | | | | | |
|---|---|---|---|---|---|---|---|---|---|---|
| | CONTRAST | BRIGHTNESS | COLOR BALANCE | SATURATION | SHARPNESS | MEMORY COLOR | | | | NOISE REMOVAL |
| | | | | | | SKY | GREEN | SKIN | RED | |
| WITHOUT CORRECTION | OFF | OFF | OFF | OFF | OFF | OFF | OFF | OFF | OFF | OFF |
| OTHER | NORMAL | NORMAL | NORMAL | NORMAL | NORMAL | OFF | OFF | OFF | OFF | OFF |
| PORTRAIT | SLIGHTLY SOFT | SLIGHTLY BRIGHT | NORMAL | SLIGHTLY WEAK | SLIGHTLY WEAK | OFF | OFF | ON | OFF | OFF |
| LANDSCAPE | SLIGHTLY SHARP | SLIGHTLY DARK | NORMAL | SLIGHTLY HIGH | SLIGHTLY STRONG | ON | ON | OFF | OFF | OFF |
| EVENING SCENE | NORMAL | OFF | WARM TONE | NORMAL | SLIGHTLY WEAK | OFF | OFF | OFF | ON | ON |
| NIGHT SCENE | NORMAL | DARK | OFF | NORMAL | NORMAL | OFF | OFF | OFF | OFF | ON |
| FLOWER | SLIGHTLY SOFT | SLIGHTLY BRIGHT | WEAK | SLIGHTLY HIGH | NORMAL | OFF | ON | OFF | OFF | OFF |
| AUTUMNAL | NORMAL | NORMAL | NORMAL | SLIGHTLY HIGH | SLIGHTLY STRONG | OFF | OFF | OFF | ON | OFF |

FIG. 7

EP 1 959 668 A2

FIG. 8

FIG. 9

EP 1 959 668 A2

OVERALL IDENTIFICATION
PROCESSING START

S201 | SELECT DISCRIMINATING
DEVICE

S202 | DISCRIMINATION
NO | TARGET?

YES

S203 | SVM

S204 | POSITIVE
THRESHOLD? | YES

NO | S205 | POSITIVE FLAG

S206 | NEGATIVE
THRESHOLD? | YES

NO | S207 | NEGATIVE FLAG

S208 | SUBSEQUENT
EXISTING | DISCRIMINATING
DEVICE?

NOT
EXISTING

OVERALL IDENTIFICATION
PROCESSING

FIG. 10

|  | LANDSCAPE | EVENING SCENE | NIGHT SCENE | FLOWER | AUTUMNAL |
|---|---|---|---|---|---|
| POSITIVE | O | O | O | O | O |
| NEGATIVE | O | O | O | O | O |

FIG. 11

POSITIVE
THRESHOLD

FIG. 12

| | | IDENTIFICATION RESULT | |
|---|---|---|---|
| | | P (POSITIVE) | N (NEGATIVE) |
| TRUE SOLUTION | P | TP (TRUE POSITIVE) | FN (FALSE NEGATIVE) |
| | N | FP (FALSE POSITIVE) | TN (TRUE NEGATIVE) |

$$\text{RECALL (RECALL RATIO, DETECTION RATE)} = \frac{TP}{TP + FN}$$

$$\text{PRECISION (PRECISION RATIO, ACCURACY RATE)} = \frac{TP}{TP + FP}$$

FIG. 13

FIG. 14

FIG. 15

POSITIVE THRESHOLD

| LANDSCAPE | DISCRIMINANT EQUATION > 1.72 |
|-----------|------------------------------|

⟹ DETERMINE SCENE

NEGATIVE THRESHOLD

| LANDSCAPE | DISCRIMINANT EQUATION < -1.01 |
|-----------|-------------------------------|
| EVENING SCENE | DISCRIMINANT EQUATION > 1.70 |
| NIGHT SCENE | DISCRIMINANT EQUATION > -0.44 |
| FLOWER | DISCRIMINANT EQUATION > 1.83 |
| AUTUMNAL | DISCRIMINANT EQUATION > 1.05 |

⟹ EXCLUDE SCENE

FIG. 16A

DETERMINE ON LANDSCAPE

— 1.72(POSITIVE THRESHOLD)

EXCLUDE NIGHT SCENE

— -0.44(SECOND NEGATIVE THRESHOLD)

— -1.01(FIRST NEGATIVE THRESHOLD)

EXCLUDE LANDSCAPE

FIG. 16B

```
        ┌─────────────────────────────┐
        │  PARTIAL IDENTIFICATION     │
        │  PROCESSING START           │
        └─────────────────────────────┘
                      │
  S301  ┌──────────────────────────────┐
        │   SELECT DISCRIMINATING      │
        │         DEVICE               │
        └──────────────────────────────┘
                      │
  S302         ◇ DISCRIMINATION ◇
   NO            ◇   TARGET?    ◇
                      │ YES
  S303  ┌──────────────────────────────┐
        │    SELECT PARTIAL IMAGE       │
        └──────────────────────────────┘
                      │
  S304  ┌──────────────────────────────┐
        │            SVM                │
        └──────────────────────────────┘
                      │
  S305    ◇ POSITIVE COUNT   ◇  YES
          ◇ VALUE > POSITIVE ◇ ──────────┐
          ◇  THRESHOLD?      ◇       S306 │
                │ NO           ┌─────────────────┐
  S307  ◇ POSITIVE COUNT    ◇ │  POSITIVE FLAG  │
        ◇ VALUE + BALANCE < ◇ └─────────────────┘
        ◇ POSITIVE          ◇ YES
        ◇ THRESHOLD?        ◇ ─────┐
                │ NO               │
  S308  ◇ SUBSEQUENT PARTIAL ◇     │
        ◇       IMAGE?       ◇     │
  EXISTING                         │
     NOT EXISTING ◄────────────────┘
                │
  S309  ◇ NEGATIVE COUNT ◇  YES
        ◇ VALUE > NEGATIVE ◇ ──────┐  S310
        ◇  THRESHOLD?      ◇  ┌─────────────────┐
                │ NO          │  NEGATIVE FLAG  │
                              └─────────────────┘
  S311  ◇ SUBSEQUENT       ◇
        ◇ DISCRIMINATING   ◇
  EXISTING ◇  DEVICE?       ◇
     NOT EXISTING ◄──────────────
                │
        ┌─────────────────────────────┐
        │  PARTIAL IDENTIFICATION     │
        │  PROCESSING END             │
        └─────────────────────────────┘
```

FIG. 17

| 31 | 27 | 20 | 39 | 24 | 19 | 17 | 29 |
|---|---|---|---|---|---|---|---|
| 30 | 38 | 28 | 33 | 32 | 36 | 23 | 40 |
| 25 | 6 | 7 | 52 | 22 | 21 | 16 | 1 |
| 14 | 37 | 26 | 35 | 15 | 8 | 3 | 9 |
| 18 | 45 | 46 | 2 | 4 | 10 | 34 | 48 |
| 47 | 5 | 13 | 43 | 42 | 51 | 12 | 53 |
| 11 | 41 | 44 | 50 | 54 | 49 | 56 | 55 |
| 59 | 60 | 58 | 61 | 57 | 63 | 64 | 62 |

FIG. 18

FIG. 19

FIG. 20A

FIG. 20B

```
         ┌─────────────────────────────┐
         │  INTEGRATIVE IDENTIFICATION  │
         │      PROCESSING START        │
         └─────────────────────────────┘
                       │
                       ▼
         ┌─────────────────────────────┐
S401     │   EXTRACT SCENE FOR WHICH    │
         │  THEVALUE OF DISCRIMINANT    │
         │     EQUATION IS POSITIVE     │
         └─────────────────────────────┘
                       │
                       ▼
                  ╱─────────╲
S402          ╱   IS THERE A SCENE  ╲        NO
             ╲   WITH POSITIVE VALUE? ╱──────────┐
                  ╲─────────╱                    │
                       │ YES                     │
                       ▼                         │
         ┌─────────────────────────────┐        │
S403     │  SET POSITIVE FLAG FOR SCENE │        │
         │      WITH MAXIMUM VALUE      │        │
         └─────────────────────────────┘        │
                       │                         │
                       │◄────────────────────────┘
                       ▼
         ┌─────────────────────────────┐
         │  INTEGRATIVE IDENTIFICATION  │
         │       PROCESSING END         │
         └─────────────────────────────┘
```

FIG. 21

SCENE INFORMATION CORRECTION
PROCESSING START

S501 | ACQUIRE SHOOTING DATA
IN IMAGE FILE

S502 | ACQUIRE IDENTIFICATION RESULT

S503 | MISMATCH BETWEEN SCENES

NO

YES

S504 | CORRECT SHOOTING DATA

SCENE INFORMATION
CORRECTION PROCESSING END

· FIG. 22

| APP1 MARKER | | |
|---|---|---|

FIG. 23

**EP 1 959 668 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007038369 A
- JP 2007315245 A
- JP 2001238177 A